# EUROPEAN PATENT APPLICATION

(11) **EP 4 832 574 A1**
(43) Date of publication of application: **28.10.2026**
(21) Application number: 24915249.7
(22) Date of filing: 31.12.2024
(51) Int. Cl.: H04W 36/00

(54) **COMMUNICATION METHOD AND APPARATUS**

(30) Priority: 05.01.2024 CN 202410024032
(71) Applicant: Huawei Technologies Co., Ltd., Shenzhen, Guangdong 518129 (CN)
(72) Inventor: LI, Haoran, Shenzhen, Guangdong 518129 (CN); XU, Yishan, Shenzhen, Guangdong 518129 (CN); XU, Shengfeng, Shenzhen, Guangdong 518129 (CN); PENG, Wenjie, Shenzhen, Guangdong 518129 (CN)
(74) Representative: Gill Jennings & Every LLP
(86) International application number: PCT/CN2024/144226
(87) International publication number: WO 2025/146035

(57) **Abstract**

This application provides a communication method and apparatus, and belongs to the field of communication technologies, so that a terminal can establish connections of 3GPP access types with a plurality of cells at the same time, so as to meet more flexible communication requirements in the future. The method includes: obtaining, by a data management network element, multi-connectivity related information, and sending the related information to a terminal. The related information includes indication information and/or policy information, the indication information is used to indicate that the terminal needs to establish multi-connectivity, the policy information is used to indicate a policy for establishing multi-connectivity, and multi-connectivity refers to separately establishing connections of 3rd Generation Partnership Project 3GPP access types with a plurality of cells at the same time.

## Description

This application claims priority to Chinese Patent Application No. 202410024032.9, filed with the China National Intellectual Property Administration on January 5, 2024, and entitled "Communication Method and Apparatus." The entire content of this application is incorporated herein by reference.

### TECHNICAL FIELD

This application relates to the field of communication, and in particular, to a communication method and apparatus.

### BACKGROUND

In the current cell selection process for a UE as defined by the 3rd Generation Partnership Project (3rd generation partnership project, 3GPP), when the UE camps on a cell, it periodically performs a cell reselection evaluation process. If a cell with better signal quality appears, the UE can reselect the cell to camp on. In this case, the newly selected cell will replace the current cell, and the UE cannot simultaneously maintain connections with two cells. In other words, the UE cannot simultaneously access two cells, and thus cannot meet the more flexible and diverse communication requirements in the future.

### SUMMARY

This application provides a communication method and an apparatus, so that a terminal can simultaneously establish 3GPP access-type connections with multiple cells, in order to meet the more flexible and diverse communication requirements in the future.

To achieve the above objectives, this application adopts the following technical solutions:
According to a first aspect, a communication method is provided, applied to a data management network element, and comprises: obtaining, by the data management network element, multi-connectivity related information, and sending the related information to a terminal. The related information includes indication information and/or policy information, the indication information is used to indicate that the terminal needs to establish multi-connectivity, the policy information is used to indicate a policy for establishing multi-connectivity, and multi-connectivity refers to separately establishing connections of 3rd Generation Partnership Project 3GPP access types with a plurality of cells at the same time.

It can be learned from the method according to the first aspect that, because a network side, namely, a data management network element, may deliver multi-connectivity related information, such as an indication and a policy required for establishing multi-connectivity, to the terminal, the terminal can simultaneously establish connections of 3GPP access types with a plurality of cells based on the related information. In other words, connections with a plurality of cells are maintained at the same time, so as to meet more flexible communication requirements in the future.

It may be understood that multi-connectivity may alternatively be expressed as: supporting dual (or multiple) radio capability (dual/multiple radio capability), supporting dual (or multiple) 3GPP access technologies (dual/multiple 3GPP RAT), supporting dual (or multiple) steering capability (dual/multiple steer), supporting dual (or multiple) 3GPP access (dual/multiple 3GPP), supporting dual (or multiple) 3GPP access types (dual/multiple 3GPP access type), supporting dual (or multiple) registration (dual/multiple registration), supporting the same access type (same access type), supporting the same access technology (same RAT), supporting the same access network (same access network), and the like. In other words, supporting one or more of the foregoing may be understood as being capable of establishing multi-connectivity.

In a possible design scheme, the policy information may include at least one of a service policy, an access type policy, a location policy, or a time policy. Among them, the service policy means that multi-connectivity needs to be established in the case that the network cannot meet a service requirement. In other words, it aims to establish connections according to the service requirement, avoiding redundancy. The access type policy means an access type combination required for establishing multi-connectivity, such as terrestrial network (TN) + non-terrestrial network (NTN) or 5G + 6G. This is done to achieve decoupling of access resources, avoiding resource strain caused by all connections using the same access type. The location policy means that multi-connectivity needs to be established in a preset area, such as a low-signal area requiring enhanced communication signals, to ensure the communication quality of users within that area. The time policy means that multi-connectivity needs to be established in a preset time period, such as a time period with high service demand, to ensure the service experience within that time period.

In a possible design scheme, the obtaining, by the data management network element, multi-connectivity related information comprises: obtaining, by the data management network element, capability information of the terminal, and obtaining the related information based on the capability information of the terminal. Among them, the capability information of the terminal is used to indicate that the terminal supports separately establishing connections of 3GPP access types with a plurality of cells at the same time, in order to avoid a waste of communication resources caused by instructing the terminal to establish multi-connectivity because the terminal does not support multi-connectivity.

Optionally, the obtaining, by the data management network element, capability information of the terminal comprises: during a registration process of the terminal, the data management network element receives a context registration request message from an access and mobility management network element. The context registration request message includes the capability information of the terminal. That is, an existing registration process is reused to implement awareness of the multi-connectivity capability of the terminal. Alternatively, implementation may be performed through a newly defined process, which is decoupled from the existing process, so that information element transmission can be more flexible.

In a possible design scheme, the obtaining, by the data management network element, multi-connectivity related information comprises: obtaining, by the data management network element, slice information requested by the terminal, and obtaining the related information based on the network slice being a slice corresponding to a multi-connectivity service. The slice information requested by the terminal is used to indicate the network slice requested by the terminal. In this case, the network slice requested by the terminal requires the network to provide multi-connectivity to ensure the service requirement of the terminal.

Optionally, the obtaining, by the data management network element, slice information requested by the terminal comprises: during a registration process of the terminal, the data management network element receives a context registration request message from an access and mobility management network element. The context registration request message includes the slice information requested by the terminal. That is, an existing registration process is reused to implement awareness of the multi-connectivity requirement of the terminal. Alternatively, implementation may be performed through a newly defined process, which is decoupled from the existing process, so that information element transmission can be more flexible.

In one possible design scheme, the obtaining, by the data management network element, multi-connectivity related information comprises: obtaining, by the data management network element, subscription data of the terminal, and obtaining the related information based on the subscription data of the terminal. The subscription data of the terminal includes information used to indicate that the network can provide a multi-connectivity service for the terminal. In other words, it indicates that the terminal is a user who has subscribed to multi-connectivity, thereby avoiding communication redundancy caused by sending multi-connectivity related information to a user who has not subscribed to multi-connectivity.

Optionally, the obtaining, by the data management network element, subscription data of the terminal comprises: during a registration process of the terminal, the data management network element receives, from the access and mobility management network element, a subscription data obtaining request message, and obtains the subscription data of the terminal based on the subscription data obtaining request message. The subscription data obtaining request message is used to request subscription data of the terminal in the network. That is, an existing registration process is reused to implement awareness of the subscription data of the terminal. Alternatively, implementation may be performed through a newly defined process, which is decoupled from the existing process, so that information element transmission can be more flexible.

In one possible design scheme, the obtaining, by the data management network element, multi-connectivity related information comprises: receiving, by the data management network element, service information from the access and mobility management network element, and obtaining the related information based on the service information. Herein, the service information is used to indicate that the network cannot meet a service requirement of the terminal. In this case, the network needs to provide additional network resources through multi-connectivity to meet the service requirement of the terminal.

Optionally, the network cannot meet the service requirement of the terminal comprises: bandwidth provided by the network for the terminal cannot meet a bandwidth requirement of a service of the terminal, and/or, signal quality of the network cannot meet a signal quality requirement of the service of the terminal. Alternatively, there may be any other possible situation, which is not limited herein.

Optionally, in response to the bandwidth provided by the network for the terminal cannot meet the bandwidth requirement of the service of the terminal, the service information is further used to indicate bandwidth that the network needs to additionally provide for the terminal. In this way, the network can determine how much bandwidth the terminal ultimately needs, so that the subsequent established multi-connectivity can provide these bandwidths, ensuring that the service requirement of the terminal can be met.

In a possible design scheme, the obtaining, by the data management network element, multi-connectivity related information comprises: obtaining, by the data management network element, the related information based on a preset condition. The preset condition includes at least one of the following: currently being within a time period in which the terminal needs to establish multi-connectivity, or a location of the terminal being within an area in which the terminal needs to establish multi-connectivity. That is, the data management network element can determine, based on the current time and the current location of the terminal, to trigger the establishment of multi-connectivity, thereby avoiding additional overhead caused by interaction with other network elements.

Optionally, the data management network element obtains the location of the terminal by subscribing to a service from an access and mobility management network element related to the terminal. Alternatively, the location of the terminal may be obtained in another manner. For example, the access network device reports the location of the terminal to the data management network element through the access and mobility management network element. Specifically, a method may be selected based on actual requirements. There is no specific limitation thereto.

In a possible design scheme, the obtaining, by the data management network element, multi-connectivity related information comprises: obtaining, by the data management network element, S-NSSAI single network slice selection assistance information and DNN data network name corresponding to a session of the terminal, and obtaining the related information based on the service of the terminal being a service that requires establishment of multi-connectivity. The S-NSSAI and the DNN correspond to the service of the terminal, that is, the establishment of multi-connectivity can also be implemented according to the service requirement of the terminal, in order to avoid redundancy.

Optionally, the obtaining, by a data management network element, S-NSSAI and DNN corresponding to a session of the terminal comprises: during a session establishment process of the terminal, the data management network element receives a context registration request message from a session management network element, where the context registration request message includes the S-NSSAI and DNN.

In a possible design scheme, the obtaining, by the data management network element, multi-connectivity related information comprises: receiving, by the data management network element, request information from the terminal, and obtaining the related information based on the request information. The request information is used to indicate that the terminal requests to establish multi-connectivity. In other words, establishment of multi-connectivity may be triggered by the terminal itself, making the interaction between the terminal and the network side simpler and the communication overhead can be reduced.

Optionally, the receiving, by the data management network element, request information from the terminal comprises: the data management network element receives a subscription data management obtaining request message from the access and mobility management network element. The subscription data management obtaining request message includes the request information. That is, implementation may be performed by reusing existing signaling, or through a newly defined process, which is decoupled from the existing process, so that information element transmission can be more flexible.

According to a second aspect, a communication method is provided, applied to an access and mobility management network element, and comprises: sending, by the access and mobility management network element, service information to a data management network element, receiving multi-connectivity related information returned by the data management network element based on the service information, and sending the related information to a terminal. The service information indicates that a network cannot meet a service requirement of the terminal. The related information includes indication information and/or policy information, the indication information is used to indicate that the terminal needs to establish multi-connectivity, the policy information is used to indicate a policy for establishing multi-connectivity, and multi-connectivity refers to separately establishing connections of 3rd Generation Partnership Project 3GPP access types with a plurality of cells at the same time.

In a possible design scheme, the method according to the second aspect may further include: receiving, by the access and mobility management network element, an N2 message from an access network device, where the N2 message includes the service information, and the service information is specifically used to indicate that the bandwidth provided by the network for the terminal cannot meet a bandwidth requirement of a service of the terminal.

Optionally, the service information is further used to indicate that the network needs to additionally provide bandwidth for the terminal.

In a possible design scheme, the method according to the second aspect may further include: obtaining, by the access and mobility management network element , service information based on the terminal being located in a low signal area. Specifically, the service information is used to indicate that the signal quality of the network cannot meet a signal quality requirement of a service of the terminal.

It can be understood that the technical effects of the method according to the second aspect may also refer to the relevant descriptions of the method according to the first aspect, and details are not described herein again.

According to a third aspect, a communication method is provided, applied to a policy control network element, and comprises: obtaining, by the policy control network element, S-NSSAI single network slice selection assistance information and DNN data network name corresponding to a session of a terminal, and sending, by the policy control network element, multi-connectivity related information to the terminal based on the service of the terminal being a service that requires establishment of multi-connectivity. The S-NSSAI and the DNN correspond to the service of the terminal. The related information includes indication information and/or policy information, the indication information is used to indicate that the terminal needs to establish multi-connectivity, the policy information is used to indicate a policy for establishing multi-connectivity, and multi-connectivity refers to separately establishing connections of 3rd Generation Partnership Project 3GPP access types with a plurality of cells at the same time.

In a possible design scheme, the obtaining, by the policy control network element, S-NSSAI and DNN corresponding to a session of a terminal comprises: receiving, by the policy control network element, the S-NSSAI and the DNN from the session management network element in a process of establishing or modifying a session policy of the terminal.

Optionally, the policy information includes at least one of a service policy, an access type policy, a location policy, or a time policy. The service policy means that multi-connectivity needs to be established in the case that a network cannot meet a service requirement. The access type policy means an access type combination required for establishing multi-connectivity. The location policy means that multi-connectivity needs to be established in a preset area. The time policy means that multi-connectivity needs to be established in a preset time period.

In other words, a corresponding function implemented by the data management network element in the first aspect may alternatively be implemented by the policy control network element in the third aspect. For details, refer to related descriptions of the method in the first aspect. Details are not described again.

According to a fourth aspect, a communication method is provided. The method may be performed by a terminal, or may be performed by a module (such as a processor, a chip, or a chip system) applied to the terminal, or may be implemented by a logical node, a logical module, or software that can implement all or some functions of the terminal. For ease of description, an example in which the method is executed by the terminal is used below for description. The method comprises: receiving multi-connectivity related information from a network, and establishing multi-connectivity with the network based on the related information. The related information includes indication information and/or policy information, the indication information is used to indicate that the terminal needs to establish multi-connectivity, the policy information is used to indicate a policy for establishing multi-connectivity, and multi-connectivity refers to separately establishing connections of 3rd Generation Partnership Project 3GPP access types with a plurality of cells at the same time.

In a possible design scheme, the policy information includes at least one of a service policy, an access type policy, a location policy, or a time policy. The service policy means that multi-connectivity needs to be established in the case that a network cannot meet a service requirement. The access type policy means an access type combination required for establishing multi-connectivity. The location policy means that multi-connectivity needs to be established in a preset area. The time policy means that multi-connectivity needs to be established within a preset time period.

In a possible design scheme, the method according to the fourth aspect may further include: sending capability information of the terminal to the network. The capability information of the terminal is used to indicate that the terminal supports separately establishing connections of 3GPP access types with a plurality of cells at the same time.

In a possible design scheme, the method according to the fourth aspect may further include: sending, to the network, S-NSSAI single network slice selection assistance information and DNN data network name corresponding to a session of the terminal. The S-NSSAI and the DNN correspond to a service of the terminal, and the service of the terminal is a service that requires establishment of multi-connectivity.

In a possible design scheme, the method according to the fourth aspect may further include: in the case that the terminal needs to establish multi-connectivity, sending request information to the network, where the request information is used to indicate that the terminal requests to establish multi-connectivity.

Optionally, the method according to the fourth aspect may further include: in response to an operation of a user for enabling multi-connectivity, determining that the terminal needs to establish multi-connectivity. That is, multi-connectivity can be established on demand according to the requirements of the user, to ensure experience of the user. Alternatively, in the case that a service of the terminal needs to be executed, obtaining a UE route selection policy URSP rule that matches the service of the terminal; and in the case that the URSP rule indicates that multi-connectivity needs to be established, determining that the terminal needs to establish multi-connectivity, so that multi-connectivity can match the service requirement, to ensure the experience of the user.

Certainly, in the embodiments of this application, the URSP rule is used as an example, but is not limited to the URSP rule. Any policy and/or rule that is similar to the URSP rule or that can implement a routing function may be used to implement the solutions in this application.

It can be understood that the technical effects of the method described in the fourth aspect may also refer to the related descriptions of the method described in the first aspect, and will not be further elaborated.

According to a fifth aspect, a communication method is provided. The method may be performed by a terminal, or may be performed by a module (for example, a processor, a chip, or a chip system) applied to the terminal, or may be implemented by a logical node, a logical module, or software that can implement all or some functions of the terminal. For ease of description, an example in which the method is performed by the terminal is used below for description. The method comprises: in the case that a service of the terminal needs to be executed, obtaining a UE route selection policy URSP rule that matches a service of the terminal; and if the URSP rule indicates that multi-connectivity needs to be established, establishing multi-connectivity with a network, where multi-connectivity refers to separately establishing connections of 3rd Generation Partnership Project 3GPP access types with a plurality of cells of the network at the same time.

According to the method described in the fifth aspect, it can be learned that the terminal may perform URSP rule matching. When a service matches a URSP rule that requires establishing multi-connectivity, the terminal triggers establishing multi-connectivity with the network side, to ensure that multi-connectivity can meet the service requirement, and ensure the user experience.

In one possible design scheme, the URSP rule further indicates an access type combination required to establish multi-connectivity.

In one possible design scheme, the method according to the fifth aspect may further include: the terminal receives the URSP rule from the network.

It can be understood that the technical effects of the method according to the fifth aspect may also refer to the relevant descriptions of the method according to the first aspect, and will not be further elaborated.

According to a sixth aspect, a communication method is provided, applied to a policy control network element, and comprises: in the case that a UE route selection policy URSP rule of a terminal needs to be updated, the policy control network element obtains a new URSP rule of the terminal, and sends the new URSP rule to the terminal. The new URSP rule is used to indicate that multi-connectivity needs to be established, and multi-connectivity refers to separately establishing connections of 3rd Generation Partnership Project 3GPP access types with a plurality of cells at the same time. That is, by updating the URSP rule, the terminal can have a capability of establishing multi-connectivity.

In one possible design scheme, the new URSP rule further indicates the access type combination required to establish multi-connectivity.

Certainly, the URSP rule is used as an example in this embodiment of this application, but is not limited to the URSP rule. Any policy and/or rule similar to the URSP rule, or that can implement a routing function, may be used to implement the solution in this application.

It may be understood that for technical effects of the method in the sixth aspect, refer to related descriptions of the method in the first aspect. Details are not described again.

According to a seventh aspect, a communication apparatus is provided, where the communication apparatus includes a module configured to perform the method according to any one of the first aspect to the sixth aspect.

In a possible design scheme, the communication apparatus according to the seventh aspect may further include a transceiver. The transceiver may be a transceiver circuit or an interface circuit. The transceiver may be used for the communication apparatus according to the seventh aspect to communicate with another communication apparatus.

In a possible design scheme, the communication apparatus according to the seventh aspect may further include a memory. The memory may be integrated with the processor, or may be disposed separately. The memory may be configured to store an instruction in any one of the first aspect to the sixth aspect.

In the embodiments of this application, the communication apparatus according to the seventh aspect may be a network device, or a chip (system) or another component or assembly that may be disposed in the network device, or an apparatus including the network device.

It may be understood that, for technical effects of the apparatus according to the seventh aspect, refer to related descriptions of the method in any one of the first aspect to the sixth aspect. Details are not described again.

According to an eighth aspect, a communication apparatus is provided. The communication apparatus includes a processor, where the processor is coupled to a memory, and the processor is configured to execute the instruction stored in the memory, so that the communication apparatus performs the method according to any one of the first aspect to the sixth aspect.

In a possible design solution, the communication apparatus according to the eighth aspect may further include a transceiver. The transceiver may be a transceiver circuit or an interface circuit. The transceiver may be configured to communicate with another communication apparatus according to the eighth aspect.

In the embodiments of this application, the communication apparatus according to the eighth aspect may be the network device according to any one of the first aspect to the sixth aspect, or a chip (system) or another component or assembly that may be disposed in the network device, or an apparatus that includes the network device.

In addition, for a technical effect of the communication apparatus according to the eighth aspect, refer to a technical effect of the method according to any one of the first aspect to the sixth aspect. Details are not described herein again.

According to a ninth aspect, a communication apparatus is provided, including: a processor and a memory, where the memory is configured to store instructions; and when the processor executes the instructions, the communication apparatus performs the method according to any one of the first aspect to the sixth aspect.

In a possible design scheme, the communication apparatus according to the ninth aspect may further include a transceiver. The transceiver may be a transceiver circuit or an interface circuit. The transceiver may be used for the communication apparatus according to the ninth aspect to communicate with another communication apparatus.

In the embodiments of this application, the communication apparatus according to the ninth aspect may be the network device according to any one of the first aspect to the sixth aspect, or a chip (system) or another component or assembly that may be disposed in the network device, or an apparatus that includes the network device.

In addition, for a technical effect of the communication apparatus according to the ninth aspect, refer to a technical effect of the method according to any one of the first aspect to the sixth aspect. Details are not described herein again.

According to a tenth aspect, a chip is provided. The chip includes: a controller and an interface circuit. The controller is configured to interact with another apparatus through the interface circuit, in order to execute the method described in any one of Aspects 1 to 6.

According to an eleventh aspect, a communication system is provided. The communication system includes a data management network element configured to execute the method described in the first aspect, and a terminal configured to execute the method described in the fourth aspect. Alternatively, the communication system includes a terminal configured to execute the method described in the fifth aspect, and a policy control network element configured to execute the method described in the sixth aspect.

According to a twelfth aspect, a computer-readable storage medium is provided. The computer-readable storage medium includes a computer program or instructions. When the computer program or instructions are run, the method described in any one of the first aspect to the sixth aspect is executed.

According to a thirteenth aspect, a computer program product is provided, including a computer program or instructions. When the computer program or instructions are run, the method described in any one of the first aspect to the sixth aspect is executed.

### BRIEF DESCRIPTION OF DRAWINGS

FIG. 1 is a schematic diagram of an architecture of a 5GS;
FIG. 2 is a schematic diagram of an SOR procedure during registration;
FIG. 3 is a schematic diagram of an SOR procedure after registration;
FIG. 4 is a schematic diagram of a session establishment procedure;
FIG. 5 is a schematic diagram of an architecture of dual connectivity;
FIG. 6 is a schematic diagram of cell selection;
FIG. 7 is a schematic diagram of an architecture of a communication system according to an embodiment of this application;
FIG. 8 is a schematic flowchart 1 of a communication method according to an embodiment of this application;
FIG. 9 is a schematic flowchart 2 of a communication method according to an embodiment of this application;
FIG. 10 is a schematic flowchart 3 of a communication method according to an embodiment of this application;
FIG. 11 is a schematic flowchart 4 of a communication method according to an embodiment of this application;
FIG. 12 is a schematic flowchart 5 of a communication method according to an embodiment of this application;
FIG. 13 is a schematic flowchart 6 of a communication method according to an embodiment of this application;
FIG. 14 is a schematic structural diagram 1 of a communication apparatus according to an embodiment of this application;
FIG. 15 is a schematic structural diagram 2 of a communication apparatus according to an embodiment of this application.

### DESCRIPTION OF EMBODIMENTS

The technical solutions in the embodiments of this application may be applied to various communication systems, such as a wireless network (Wi-Fi) system, a vehicle-to-everything (vehicle to everything, V2X) communication system, a device-to-device (device-to-device, D2D) communication system, an Internet of Vehicles communication system, a 4th generation (4th generation, 4G) mobile communication system, such as a long term evolution (long term evolution, LTE) system, a worldwide interoperability for microwave access (worldwide interoperability for microwave access, WiMAX) communication system, a 5th generation (5th generation, 5G) mobile communication system, such as a new radio (new radio, NR) system, and future communication systems, such as 5.5G, and a 6th generation (6th generation, 6G) mobile communication system, etc.

For ease of understanding, the following first describes technical terms involved in this application.

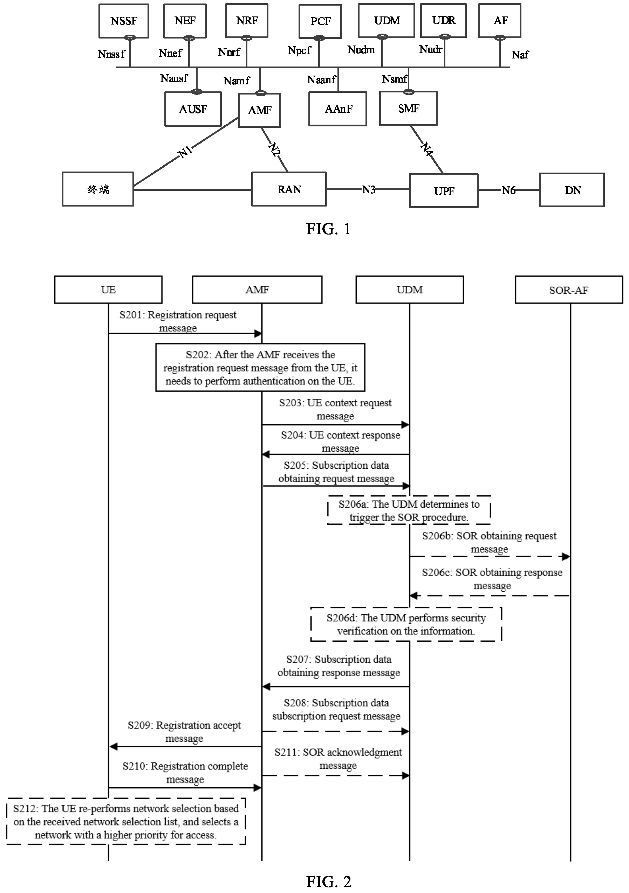

FIG. 1 is a schematic architectural diagram of a 5GS. As shown in FIG. 1, the 5GS includes an access network (access network, AN) and a core network (core network, CN), and may further include a terminal.

The terminal may be a terminal with a transceiver function, or a chip or a chip system that can be disposed in the terminal. The terminal may also be referred to as user equipment (user equipment, UE), an access terminal, a subscriber unit (subscriber unit), a subscriber station, or a mobile station (mobile station, MS), a mobile station, a remote station, a remote terminal, a mobile device, a user terminal, a terminal, a wireless communication device, a user agent, or a user device. The terminal in the embodiments of this application may be a mobile phone (mobile phone), a cellular phone (cellular phone), a smart phone (smart phone), a tablet computer (Pad), a wireless data card, or a personal digital assistant (personal digital assistant, PDA), a wireless modem (modem), a handset (handset), a laptop computer (laptop computer), a machine type communication (machine type communication, MTC) terminal, a computer with a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), and a wireless terminal in a smart grid (smart grid), a wireless terminal in transportation safety (transportation safety), a wireless terminal in a smart city (smart city), a wireless terminal in a smart home (smart home), a vehicle-mounted terminal, and a road side unit (road side unit, RSU) with a terminal function, etc. Alternatively, the terminal in this application may be an in-vehicle module, an in-vehicle module, an in-vehicle component, an in-vehicle chip, or an in-vehicle unit built into a vehicle as one or more parts or units.

The AN is configured to implement an access-related function, provide a network access function for an authorized user, and determine transmission links of different quality according to a user level, a service requirement, and the like to transmit user data. The AN forwards control signals and user data between the terminal and the CN. The AN may include an access network device, or may be referred to as a radio access network (radio access network, RAN) device.

The CN is mainly responsible for maintaining the subscription data of the mobile network, and providing functions such as session management, mobility management, policy management, and security authentication for the terminal. The CN mainly includes all or some of the following functions: a user plane function (user plane function, UPF), an authentication server function (authentication server function, AUSF), and an access and mobility management function (access and mobility management function, AMF), a session management function (session management function, SMF), a network slice selection function (network slice selection function, NSSF), a network exposure function (network exposure function, NEF), and a network storage function (network repository function, NRF), a policy control function (policy control function, PCF), unified data management (unified data management, UDM), unified data repository (unified data repository, UDR), and an application function (application function, AF).

As shown in FIG. 1, the UE accesses the 5G network through the RAN device. The UE communicates with the AMF through the N1 interface (referred to as N1). The RAN communicates with the AMF through the N2 interface (referred to as N2). The RAN communicates with the UPF through the N3 interface (referred to as N3). The SMF communicates with the UPF through the N4 interface (referred to as N4). The UPF accesses the data network (data network, DN) through the N6 interface (referred to as N6). In addition, the control plane functions such as the AUSF, AMF, SMF, NSSF, NEF, NRF, PCF, UDM, UDR, or AF in FIG. 1 use service-based interfaces for interaction. For example, the AUSF provides the Nausf service-based interface for external entities. The AMF provides the Namf service-based interface for external entities. The SMF provides the Nsmf service-based interface for external entities. The NSSF provides the Nnssf service-based interface for external entities. The NEF provides the Nnef service-based interface for external entities. The NRF provides the Nnrf service-based interface for external entities. The PCF provides the Npcf service-based interface for external entities. The UDM provides the Nudm service-based interface for external entities. The UDR provides the Nudr service-based interface for external entities. The AF provides the Naf service-based interface for external entities.

The RAN device may be a device that provides access for a terminal. For example, the RAN device may include: a next-generation mobile communication system, for example, a 6G access network device, for example, a 6G base station, or in a next-generation mobile communication system, the network device may also have another naming manner. All these are covered within the protection scope of the embodiments of this application, and this application does not impose any limitation thereon. Alternatively, the RAN device may include a gNB in 5G, for example, a new radio (new radio, NR) system, or one or a group of antenna panels (including a plurality of antenna panels) of a base station in 5G, or may further be a network node constituting a gNB, a transmission and reception point (transmission and reception point, TRP or transmission point, TP), or a transmission measurement function (transmission measurement function, TMF), such as a baseband unit (building base band unit, BBU), a centralized unit (centralized unit, CU), a distributed unit (distributed unit, DU), an RSU having a base station function, a wired access gateway, or a 5G core network. Alternatively, the RAN device may also include an access point (access point, AP) in a wireless fidelity (wireless fidelity, WiFi) system, a wireless relay node, a wireless backhaul node, various forms of macro base stations, micro base stations (also referred to as small cells), relay stations, access points, wearable devices, vehicle-mounted devices, and the like.

The UPF is primarily responsible for user data processing (such as forwarding, receiving, billing, etc.). For example, the UPF can receive user data from a data network (data network, DN), and forward the user data to a terminal through an access network device. The UPF can also receive user data from a terminal through an access network device, and forward the user data to the DN. The DN refers to an operator network that provides data transmission services for users. For example, the Internet Protocol (internet protocol, IP) Multimedia Service (IP multi-media service, IMS), and the Internet (internet), etc. The DN can be an external network of the operator, or a network controlled by the operator, used to provide service for the terminal. In a protocol data unit (protocol data unit, PDU) session, the UPF that is directly connected to the DN through N6 is also referred to as a protocol data unit session anchor (protocol data unit Session Anchor, PSA).

The AUSF is primarily used to perform security authentication for a terminal.

The AMF is primarily used for mobility management in a mobile network. For example, it handles user location updates, user registration with the network, and user handovers.

The SMF is primarily used for session management in a mobile network. For example, it handles session establishment, modification, and release. Specific functions include assigning an internet protocol (internet protocol, IP) address to a user, and selecting a UPF that provides data packet forwarding functions.

The PCF primarily supports providing a unified policy framework to control network behavior. It provides policy rules to the control layer network functions. Additionally, the PCF is responsible for obtaining user subscription information related to policy decision-making. The PCF can provide policies to the AMF and SMF, such as quality of service (quality of service, QoS) policies and slice selection policies.

The NSSF is primarily used to select a network slice for a terminal.

The NEF is primarily used to support the openness of capabilities and events.

The UDM is mainly used to store user data, such as subscription data, authentication/authorization data, etc.

The UDR is primarily used to store structured data. The stored content includes subscription data and policy data, externally exposed structured data, and application-related data.

AF primarily supports services by interacting with the CN. For example, it can influence data routing decisions, policy control functions, or provide third-party services to the network side.

It can be understood that the functions mentioned in the embodiments of this application can also be described as functional network elements or functional entities. For example, the UPF may be described as a UPF network element, the AMF may be described as an AMF network element, the SMF may be described as an SMF network element, the PCF may be described as a PCF network element, and so on. By analogy, this is not limited.

### 2. UE route selection policy (UE route selection policy, URSP):

The URSP rule is policy information delivered by the PCF network element to the UE. Each time a new application emerges and needs to establish a session to obtain a service, the UE evaluates the URSP rule and selects the most appropriate URSP rule to match the application. so that when the UE establishes a session of the application, the session is established according to a requirement of the selected URSP rule.

A URSP rule contains the following items:
1) Traffic descriptor:
   The traffic descriptor includes some parameters used to match an application, for example, information such as an application descriptor (OS ID and APP ID), an IP descriptor, a domain name descriptor, and a data network name (data network name, DNN). When the UE needs to initiate a new service, the UE needs to match the URSP rule based on the service characteristics and traffic descriptor, and select the best matching URSP rule to serve the UE. For example, when the user wants to use the social software, and the APP ID in the URSP rule is the social software traffic descriptor, the UE should match the URSP rule, and establish a session according to the requirement of the URSP rule to obtain the service.
2) Route selection descriptors (route selection descriptors, RSD):
   A URSP rule may include one or more route selection descriptors. Different route selection descriptors have different priorities. When establishing a session, the UE needs to establish the corresponding session according to the requirement of the route selection descriptor RSD. Specifically, it can be divided into the following two parts:
   a) Route selection components (route selection components):
      The route selection component includes session and service continuity mode (session and service continuity mode, SSC mode), slice information, DNN information, etc. When the UE establishes a session, the UE needs to establish the corresponding session according to the requirements of the route selection component. Optionally, the route selection component may include an access type preference (access type preference). Currently, this parameter may have three possible values, which respectively indicate 3GPP, Non-3GPP, and Multi-Access. When indicating 3GPP, it means that the session needs to be established through the 3GPP access type. When indicating Non-3GPP, it means that the session needs to be established through the Non-3GPP access type. When indicating Multi-Access, it means that the session needs to be established simultaneously through the 3GPP access type and the Non-3GPP access type.
   b) Route selection validation criteria:
      The route selection validation criterion is an optional parameter, and may include time window information and geographical location information. The two parameters are used to verify whether the RSD including the route selection validation criterion is currently available. Only when the current time of the UE meets the time window information requirement and the geographical location meets the geographical location information requirement, the UE can establish a corresponding session according to the RSD. When the RSD does not include the corresponding condition information, it may be considered that the RSD has no such restrictions, and the UE may establish a session at any time and/or any place.
3) Steering of roaming (SOR):
   The SOR procedure may be used to update configuration of the UE, for example, update a network selection list of the UE, so that the UE can select a PLMN for access according to a public land mobile network (public land mobile network, PLMN) indicated in the network selection list. The SOR procedure can be classified into two types: the SOR procedure initiated during the registration procedure and the SOR procedure triggered after the registration procedure. The following sections describe the SOR procedure.

As shown in FIG. 2, the specific procedure of the SOR procedure initiated in the registration procedure is as follows:
S201: The UE sends a registration request (registration request) message to the AMF.

The registration request message carries a registration type (registration type) and identification information of the UE.

The registration type includes the following:
1) Initial registration: A registration procedure initiated when the UE is in a deregistered state.
2) Mobility registration update (mobility registration update): a registration procedure that needs to be initiated when the UE moves.
3) Periodic registration update (periodic registration update): When the UE is in a registration state, a registration procedure is initiated because the periodic registration update timer expires.
(4) Emergency registration (emergency registration): a registration procedure initiated when the UE is in a service-limited state.

The identification information of the UE may be a user hidden identifier (subscription concealed identifier, SUCI), or a 5G globally unique temporary UE identity (5G globally unique temporary identifier, 5G-GUTI) allocated by an AMF serving the UE, or a permanent equipment identifier (permanent equipment identifier, PEI). If the UE can provide a valid 5G-GUTI, the 5G-GUTI is carried in the registration request. If the UE cannot provide a valid 5G-GUTI, the registration request carries the SUCI. During emergency registration, if the UE cannot provide a valid 5G-GUTI or SUPI (that is, there is no SUCI. SUCI is the encrypted SUPI.), the registration request carries the PEI.

S202: After the AMF receives a registration request message from the UE, the AMF needs to perform authentication on the UE.

S203: The AMF sends a UE context registration request message (Nudm_UECM_Registration request) to the UDM.

S204: The UDM sends a UE context registration response message (Nudm_UECM_Registration response) to the AMF.

After the UE's authentication is successful, the AMF registers the UE context with the UDM, that is, performs S203 to S204.

S205: The AMF sends a subscription data obtaining request message (Nudm_SDM_Get request) to the UDM.

If the AMF does not have the subscription data of the UE, the AMF further needs to obtain the subscription data of the UE from the UDM.

Optionally, S206a: The UDM determines to trigger the SOR procedure.

If the subscription information of the UE indicates that the SOR procedure can be triggered based on the initial registration of the UE in the visited public land mobile network (visited public land mobile network, VPLMN), then when the UE performs initial registration in the VPLMN (in other words, the AMF is an AMF in the VPLMN, or a V-AMF), the UDM (in other words, a UDM in the home public land mobile network (home public land mobile network, HPLMN), or a H-UDM) should trigger the SOR procedure for the UE. Alternatively, the UDM may also trigger the SOR procedure based on an operator policy.

It can be understood that, unless otherwise specified, the UDM mentioned in embodiments of this application may be understood as a UDM in an HPLMN. Unless otherwise specified, the AMF mentioned in embodiments of this application may be understood as an AMF in a VPLMN, or may be understood as an AMF in an HPLMN. For example, if the UE registers with the HPLMN, the AMF is an AMF in the HPLMN. If the UE registers with the VPLMN, the AMF is an AMF in the VPLMN.

Optionally, in S206b, the UDM sends an SOR obtaining request (Nsoraf_SoR_Get request) message to the steering of roaming application function (steering of roaming application function, SOR-AF).

Optionally, in S206c, the SOR-AF sends an SOR obtaining response (Nsoraf_SoR_Get response) message to the UDM.

Optionally, in S206d, the UDM performs security verification on the information.

Among them, if the UDM needs to provide the UE with an SOR when the UE performs registration in the VPLMN, and there is no HPLMN policy for the SOR-AF call, then S206b-S206c is not performed. The UDM obtains the stored network selection list from the UDR. If the UDM needs to provide the UE with an SOR when the UE performs registration in the VPLMN, and there is an HPLMN policy for the SOR-AF call, then the UDM obtains the network selection list from the SOR-AF through S206b-S206c. At this time, after the UDM obtains the network selection list of the UE from the SOR-AF, the UDM may further perform S206d to perform security verification on the network selection list.

S207: The UDM sends a subscription data obtaining response (Nudm_SDM_Get response) message to the AMF.

After the UDM determines information about the SOR (such as network selection list of the UE), the UDM can send a subscription data obtaining response message to the AMF. This message carries the subscription data of the UE and the network selection list.

Optionally, S208: The AMF sends a subscription data subscription request (Nudm_SDM_Subscribe request) message to the UDM.

The subscription data subscription request message is used to indicate that if the UDM has a change in subscription data related to the UE, the UDM needs to send the latest subscription data of the UE to the AMF according to the requirements of the subscription data subscription request message.

S209: The AMF sends a registration accept (registration accept) message to the UE.

The AMF includes the network selection list of the UE received by the AMF in the registration accept message.

S210: The UE sends a registration complete (registration complete) message to the AMF.

The UE performs security verification on the received network selection list. If the security verification succeeds and the UDM does not require sending a feedback message, the UE sends a registration complete message to the AMF, where the message does not include the SOR acknowledgment message. If the security verification fails, or the UE is configured to require receiving SOR information, such as a network selection list, but does not receive the corresponding network selection list in the registration accept message, then the UE sends a registration complete message to the AMF, where the message also does not include the SOR acknowledgment message. If the security verification succeeds and the UDM requires sending a feedback message, then the UE sends a registration complete message to the AMF, where the message includes the SOR acknowledgment message.

Optionally, S211: The AMF sends an SOR acknowledgment message to the UDM.

If the AMF receives the SOR acknowledgment message, then the AMF should provide the SOR acknowledgment message to the UDM. After receiving the SOR acknowledgment message, the UDM can determine, based on a requirement of an operator policy or subscription data of the UE, whether feedback needs to be provided to the SOR-AF. If the UDM needs to provide feedback to the SOR-AF, the UDM provides feedback to the SOR-AF by sending the SOR acknowledgment message.

Optionally, S212: The UE re-performs network selection based on the received network selection list, and selects a network with a high priority for access.

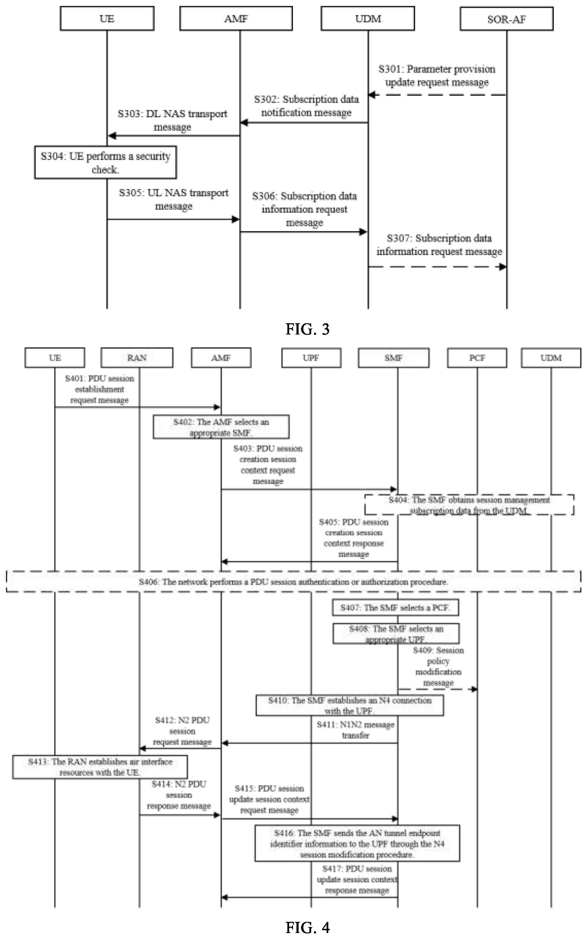

As shown in FIG. 3, the specific procedure of the SOR procedure triggered after the registration procedure is as follows:
Optionally, S301: The SOR-AF sends a parameter provision update request (Nudm_ParameterProvision_Update request) message to the UDM.

If the UDM supports obtaining, from the SOR-AF, a list of preferred PLMN/access technology combinations (preferred PLMN/access technology combinations), that is, the network selection list, then the SOR-AF may send a parameter provision update request to the HPLMN UDM, in order to carry the network selection list.

S302: The UDM sends a subscription data notification (Nudm_SDM_Notification) message to the AMF.

The subscription data notification message may include an updated network selection list. The UDM may obtain the updated network selection list (for example, sent by the SOR-AF in S300, or obtained from the UDR). The UDM notifies the AMF of the subscriber profile update. Optionally, the updated network selection list information may be included in steering of roaming information (steering of roaming information). In this case, the UDM may send a subscription data notification message to the AMF to carry the updated network selection list.

S303. The AMF sends a downlink NAS transport (DL NAS Transport) message to the UE.

The downlink NAS transport message may include information obtained by the AMF from the UDM, that is, the AMF transparently transmits the information obtained from the UDM to the UE. In other words, if the UDM sends an updated network selection list to the AMF, the downlink NAS message includes the network selection list. If the UDM sends roaming steering information to the AMF, and the roaming steering information includes the updated network selection list, the downlink NAS transport message also includes the roaming steering information.

S304: The UE performs a security check.

If the UE receives the aforementioned steering of roaming information or an updated network selection list, the UE needs to perform a security check to confirm that this information is provided by the HPLMN. If the security check is successful, the UE will upload this information to the user service identity module (user service identity module, USIM) card, or replace the information previously stored by the UE.

S305: The UE sends an uplink NAS transport (UL NAS Transport) message to the AMF.

If the UDM requests the UE to provide a response message, the UE may include the response message in the uplink NAS transport message. Optionally, the response message may be a message included in an SOR transparent container (SOR transparent container) in the uplink NAS transport message, and specifically may be a subscription data information request (Nudm_SDM_Info request) message.

S306: The AMF sends a subscription data information request message to the UDM. The UDM verifies that the subscription data request information message is sent by the UE.

Optionally, S307: The UDM sends a subscription data information request (Nsoraf_SoR_Info request) message to the SOR-AF.

If the updated network selection list is provided by the SOR-AF, the UDM may perform S307 to indicate that the network selection list has been successfully transmitted to the UE.

### 4. Session establishment procedure:

As shown in FIG. 4, 3GPP defines a session establishment procedure, which is specifically as follows:
S401: The UE sends a PDU session establishment request message (PDU Session Establishment Request) to the AMF. The PDU session establishment request message is a NAS message, and carries parameters such as the PDU session identifier (PDU session ID), the request type (request type), the name of the data network requested by the UE (UE requested DNN), and the slice information (S-NSSAI).

S402: The AMF selects an appropriate SMF.

S403: The AMF sends a PDU session creation session context request (Nsmf_PDUSession_CreateSMContext Request) message to the SMF. The PDU session creation session context request message carries parameters such as the UE's SUPI.

Optionally, S404: The SMF obtains session management subscription data from the UDM. The subscription data may include information about whether a session can be established.

S405: The SMF sends a PDU session creation session context response (Nsmf_PDUSession_CreateSMContext Response) message to the AMF.

Optionally, S406: The network performs a PDU session authentication or authorization procedure.

S407: The SMF selects a PCF. If dynamic PCC rules are required, the SMF selects a PCF and establishes a session policy association with the PCF. For example, the SMF sends a policy association establishment request (SM Policy Association Establishment Request) message to the PCF, and the PCF sends a policy association establishment response (SM Policy Association Establishment Response) message to the SMF.

S408: The SMF selects an appropriate UPF.

Optionally, S409: The SMF sends a session policy modification (SMF initiated SM Policy Association Modification) message to the PCF. For example, if the PCF has subscribed to events from the SMF in advance, such as a change in the time zone or location of the UE, the SMF may report the change information to the PCF through the session policy modification message.

S410: The SMF establishes an N4 connection with the UPF. Specifically, as in S410a, the SMF sends an N4 session establishment/modification request (N4 Session Establishment/Modification Request) message to the UPF. This message includes N4 rules, such as a packet detection rule (packet detection rule, PDR) or a forwarding action rule (forwarding action rule, FAR). Additionally, as in S410b, the UPF sends an N4 session establishment/modification response (N4 Session Establishment/Modification Response) message to the SMF.

S411. The SMF sends an N1N2 message transfer (Namf_Communication_N1N2MessageTransfer) message, where the message includes information such as the session identifier, N2 interface session management information (N2 SM information), and an N1 interface session management container (N1 SM Container). The N2 interface session management information is a message sent by the SMF to the RAN by using the AMF. The N2 interface session management information further includes information such as a tunnel endpoint identifier of the UPF, and is used to notify the RAN of where (which may be understood as a destination address of the uplink data) the uplink data should be sent. Information in the N1 interface session management container is sent by the SMF to the UE through the AMF. For example, the AMF sends the information to the UE through a NAS message.

S412. The AMF sends an N2 PDU session request (N2 PDU Session Request) message to the RAN, where the message carries the N2 interface session management information and a NAS message that needs to be sent to the UE, and the NAS message includes the session identifier and the N1 interface session management container.

S413: The RAN establishes an air interface resource with the UE. For example, the RAN sends the NAS message described above to the UE. The NAS message may also carry a PDU session establishment accept message.

S414: The RAN sends an N2 PDU session response (N2 PDU Session Response) message to the AMF. The message carries the tunnel endpoint identifier on the RAN side, that is, the AN tunnel endpoint identifier information.

S415: The AMF sends an Nsmf_PDUSession_UpdateSMContext Request message to the SMF. The message carries the AN tunnel endpoint identifier information.

S416: The SMF sends the AN tunnel endpoint identifier information to the UPF through an N4 session modification procedure. For example, S416a: The SMF sends an N4 session modification request message to the UPF. The message includes the AN tunnel endpoint identifier information, so as to notify the UPF of where the downlink data should be sent. In addition, S416b: The UPF sends an N4 session modification response message to the SMF.

S417. The SMF sends a PDU session update session context response (Nsmf_PDUSession_UpdateSMContext Response) message to the AMF.

### 5. 3GPP-based connection architecture:

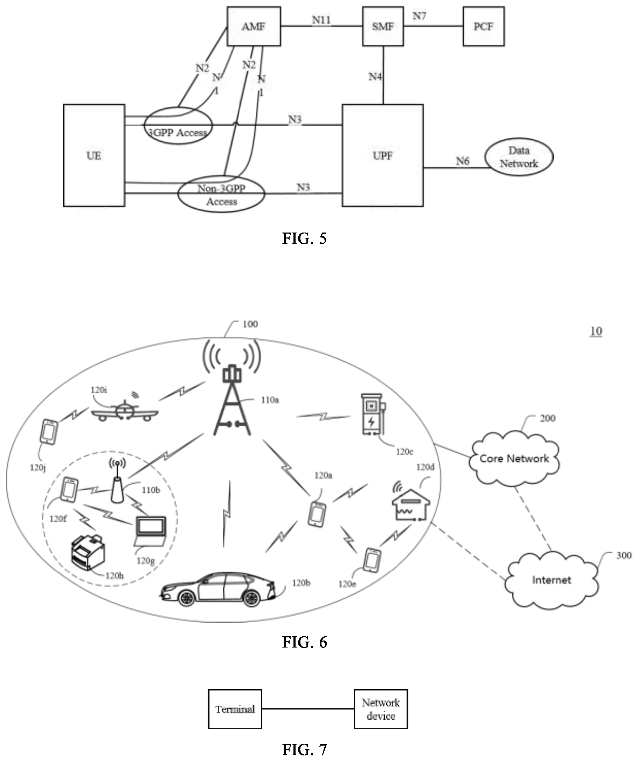

As shown in FIG. 5, an existing 3GPP architecture supports a UE in accessing a network by using both a 3GPP access type (3GPP access type) and a non-3GPP access type (N3GPP access type). The so-called 3GPP access type, that is, the access type of the access network is the 3GPP access type. The 3GPP access type may include the following access technologies: LTE (corresponding to a 4G cellular network), NR (corresponding to a 5G cellular network), or may be a 3GPP-defined satellite access mode, including a low-orbit satellite, a medium-orbit satellite, a synchronous satellite, and the like. The non-3GPP access type includes an untrusted non-3GPP access technology (untrusted non-3GPP access), for example, a core network is accessed by using a radio access node purchased by an individual, and a trusted non-3GPP access technology (trusted non-3GPP access), for example, a wireless access node deployed by a carrier is used to access a core network and a wired access technology (wireline access). The non-3GPP access type may be Wireless Fidelity (WiFi), Bluetooth, ZigBee, or the like.

### 6. Cell selection:

Currently, 3GPP defines cell selection as follows:
After the UE selects a network, the UE enters state 1. In this case, if the UE has saved the cell information (measured and saved previously), the UE selects the cell according to the stored cell information. If the UE does not save the cell information, the UE initiates initial cell selection. When the cell selection is performed according to the information stored in the cell, if a suitable cell (for example, a cell with the best signal quality in the network) is available, the cell is selected to camp on. If no suitable cell is available, the cell selection is performed. During initial cell selection, if a suitable cell is found, the cell is selected for camping. If no suitable cell is found (for example, the signal strength of the cell is lower than the threshold), the cell selection state is entered. (Any cell selection state indicates that a cell other than the local network can be selected. If emergency services are required, the cell can be selected.)

When the UE normally camps on a cell, if the UE has a service, the UE needs to actively send information to the network, or the UE receives a paging (paging) message, and triggers the UE to restore a connection to the network. The UE leaves the idle mode or inactive mode and enters the connected mode. After the UE returns from the connected mode to the idle mode, the UE selects a cell to camp on. If a suitable cell is available, the UE directly camps on the cell. If no suitable cell is available, the UE selects a cell based on the saved cell information.

When a UE camps on a cell, the cell reselection procedure is performed periodically. If a cell with better signal quality appears, the UE can select another cell to camp on. If no cell is available around the cell, the UE enters the cell selection state.

After the UE camps on the cell, the NAS message received by the UE indicates that the registration message of the UE is rejected, and the UE enters the random cell selection state. When no subscriber identity module (subscriber identity module, SIM) card is inserted into the UE, or the UE does not have subscription data of an independent non-public network (stand-alone non-public network, SNPN), the UE may also enter any cell selection. In this case, if the UE inserts a SIM card or obtains the subscription data of the SNPN, the UE may reselect a network and return to state 1.

When the UE is in any cell selection state, if a suitable cell is available, the UE selects an appropriate cell and returns to state 2. If an acceptable cell (such as a cell in another network) is found, the UE selects a cell in another network and enters the idle state. If a suitable cell is available, the UE selects a suitable cell and enters state 2. Similarly, the UE periodically performs cell reselection evaluation. If a cell with better signal quality appears, the UE reselects another cell. If there is no nearby cell to select, the UE enters any cell selection state.

When the UE needs to perform an emergency service, the UE recovers from the idle state to the connected state. When the UE returns from the connected state to the idle state, the UE performs cell selection. If an acceptable cell is found, the UE selects an acceptable cell to camp on. If no acceptable cell is found, the cell selection state is returned.

It can be learned that, in the prior-art cell selection technology, cell reselection by the UE is triggered according to a cell signal quality measurement result. If a cell with better signal quality appears, the UE is triggered to select a new cell to replace the current cell. However, according to the prior-art solution, the newly selected cell replaces the current cell, and the UE cannot maintain connections to two cells at the same time. In other words, the UE cannot access two cells at the same time, and cannot meet more and more flexible communication requirements in the future.

For the foregoing technical problem, the embodiments of this application provide the following technical solutions.

The following describes the technical solutions in this application with reference to the accompanying drawings.

In this embodiment of this application, the "indication" may include a direct indication and an indirect indication, or may include an explicit indication and an implicit indication. Information indicated by specific information is referred to as to-be-indicated information. In a specific implementation process, there are many manners of indicating the to-be-indicated information. For example, but not limited to, the to-be-indicated information may be directly indicated, for example, the to-be-indicated information or an index of the to-be-indicated information. Alternatively, the to-be-indicated information may be indirectly indicated by indicating other information, where an association relationship exists between the other information and the to-be-indicated information. Alternatively, only a part of the to-be-indicated information may be indicated, and another part of the to-be-indicated information is known or agreed in advance. For example, specific information may be further indicated by using a pre-agreed (for example, specified in a protocol) arrangement sequence of each piece of information, so as to reduce indication overheads to some extent. In addition, a common part of all pieces of information may be further identified and uniformly indicated, so as to reduce indication overheads caused by separately indicating same information.

In addition, the specific indication method may also be various existing indication methods, for example, but not limited to, the aforementioned indication methods and various combinations thereof. For specific details of the various indication methods, reference may be made to the prior art, and details are not described herein again. As can be learned from the foregoing, for example, when it is required to indicate a plurality of pieces of information of a same type, a case in which indication methods of different information are different may occur. In a specific implementation process, a required indication method may be selected according to a specific requirement. The indication method selected in this embodiment of this application is not limited. In this way, the indication method involved in this embodiment of this application should be understood as covering various methods that can enable the to-be-indicated party to learn the to-be-indicated information.

It should be understood that the to-be-indicated information may be sent as a whole, or may be divided into multiple pieces of sub-information and sent separately. In addition, the sending periods and/or sending opportunities of these pieces of sub-information may be the same or may be different. A specific sending method is not limited in this embodiment of this application. These pieces of sub-information may have a sending period and/or a sending opportunity that is predefined. For example, the sending period and/or the sending opportunity may be predefined according to a protocol. Alternatively, the sending period and/or the sending opportunity may be configured by the transmit end device by sending configuration information to the receive end device.

"Send information" in this application may be understood as sending information by a device to another device, or may be understood as sending information by a logical module in a device to another logical module. For example, "sending information by the network device" may be understood as sending information by the network device to another device (for example, a terminal or another network device), or may be understood as sending information by the logical module 1 in the network device to the logical module 2 in the network device.

In this application, "receiving information" may be understood as receiving, by a device, information from another device, or may be understood as receiving, by a logical module in a device, information from another logical module. For example, "receiving information by the network device" may be understood as that the network device receives information from another device (for example, a terminal or another network device), or may be understood as that the logical module 1 in the network device receives information from the logical module 2 in the network device.

In this application, "sending information to... (for example, a terminal)" or a related schematic diagram in the accompanying drawings may be understood as that a destination end of the information is a terminal. It may include sending information to the terminal directly or indirectly. "Receive information from... (for example, a terminal)" or "receive information from... (for example, a terminal)" or "receive information sent by (for example, a terminal)", or a related schematic diagram in the accompanying drawings may be understood as that a source end of the information is a terminal. It may include receiving information directly or indirectly from the terminal. Necessary processing may be performed between the source end and the destination end, for example, the format change, but the destination end can understand the valid information from the source end. Similar descriptions in this application may be similarly understood, and details are not described herein again.

"Predefined" or "preconfigured" may be implemented by pre-storing corresponding code, tables, or other methods that can be used to indicate related information in a device. The embodiments of this application do not impose any limitation on the specific implementation method. Herein, "storing" may refer to storing in one or more memories. The one or more memories may be separately disposed, or may be integrated into an encoder or decoder, a processor, or a communication apparatus. The one or more memories may alternatively be partially disposed separately, and partially integrated into a decoder, a processor, or a communication apparatus. The type of the memory may be any form of storage medium, and the embodiments of this application do not impose any limitation on this.

In the embodiments of this application, the "protocol" mentioned may refer to a standard protocol in the communication field, such as a protocol family, a frame structure similar to a protocol family, or a related protocol applied to a future communication system. The embodiments of this application do not impose any specific limitation on this.

In the embodiments of this application, the "when...," "in the case of...," "if," and "when" descriptions all refer to a situation in which a device performs corresponding processing under certain objective conditions. These descriptions do not impose any limitation on time, nor do they require that the device must have a judgment action when implementing the processing, or imply the existence of other limitations.

In the description of this embodiment of this application, unless otherwise specified, "/" indicates that associated objects are in an "or" relationship. For example, A/B may represent A or B. In this embodiment of this application, "and/or" is merely an association relationship for describing associated objects, and indicates that three relationships may exist. For example, A and/or B may indicate that only A exists, both A and B exist, and only B exists. A and B may be a singular number or a plural number. In addition, in the descriptions of the embodiments of this application, unless otherwise specified, "a plurality of" means two or more than two. "At least one of the following" or a similar expression thereof refers to any combination of these items, including any combination of a single item or a plural item. For example, at least one (one) of a, b, or c may represent: a, b, c, a-b, a-c, b-c, or a-b-c, where a, b, and c may be one or more. In addition, for ease of clearly describing the technical solutions in the embodiments of this application, in the embodiments of this application, words such as "first" and "second" are used to distinguish same items or similar items with basically same functions and effects. A person skilled in the art may understand that the words "first" and "second" do not limit a quantity and an execution sequence, and the words "first" and "second" do not necessarily limit a difference. In addition, in this embodiment of this application, words such as "example" or "for example" are used to represent an example, an example, or a description. Any embodiment or design solution described as "example" or "for example" in the embodiments of this application should not be interpreted as being more preferred or advantageous than other embodiments or design solutions. Specifically, the use of the words "example" or "e.g." is intended to present the relevant concepts in a concrete manner for ease of understanding.

The network architecture and the service scenario described in the embodiments of this application are intended to describe the technical solutions in the embodiments of this application more clearly, but do not constitute a limitation on the technical solutions provided in the embodiments of this application. A person of ordinary skill in the art may know that with evolution of the network architecture and emergence of a new service scenario, the technical solutions provided in the embodiments of this application are also applicable to similar technical problems.

For ease of understanding the embodiments of this application, a communication system applicable to the embodiments of this application is first described in detail by using a communication system as an example.

FIG. 6 and FIG. 7 are schematic architectural diagrams of a communication system. As shown in FIG. 6 and FIG. 7, the communication system mainly includes a network device and a terminal.

The communication system 10 includes a radio access network (radio access network, RAN) 100 and a core network (core network, CN) 200. The network device may be specifically a network element in the core network 200. The network device may be a data management network element, for example, a UDM in 5G, or a future communication system, or may be any network element/function/entity configured to implement a related function such as data management or storage. This is not specifically limited. Alternatively, the network device may be a policy control network element, such as a PCF, or in a future communication system, or may be any network element/function/entity configured to implement a related function such as policy management or control. This is not specifically limited. Alternatively, the network device may be an access and mobility management network element, such as an AMF, or in a future communication system, or may be any network element/function/entity configured to implement a related function such as access and mobility management. This is not specifically limited.

A terminal may also be referred to as a terminal device, user equipment (user equipment, UE), a mobile station, a mobile terminal, or the like. The terminal can be widely applied in various scenarios, such as device-to-device (device-to-device, D2D) communication, vehicle-to-everything (vehicle to everything, V2X) communication, machine-type communication (machine-type communication, MTC), the Internet of Things (internet of things, IOT), virtual reality, augmented reality, industrial control, autonomous driving, telemedicine, smart grids, smart furniture, smart offices, smart wearables, smart transportation, smart cities, and the like. The terminal may be a mobile phone, a tablet computer, a computer with a wireless transceiver function, a wearable device, a vehicle, an unmanned aerial vehicle, a helicopter, an airplane, a ship, a robot, a robotic arm, a smart home device, or the like. The embodiments of this application do not limit a device form of the terminal.

The terminal can also be understood as a terminal device that has multiple subscription data records. The terminal device may have multiple SIM card modules, and each module may correspond to one subscription data record. There is an association relationship between the subscription data records. For example, two subscription data records may be associated with the same user. The terminal may be a user equipment having multiple SIM cards, or may be a system integrating multiple sets of user equipment. Each set of user equipment has a SIM card module and a communication module, and can establish a connection with a network.

In a communication system, multi-connectivity may be established between the terminal and the network. Multi-connectivity requires the terminal to access the network through two 3GPP access types at the same time by using one subscription data record. In other words, the terminal establishes 3GPP access type connections with multiple cells at the same time. For example, if multi-connectivity is dual-connectivity, in a future network evolution process, due to further requirements for bandwidth or coverage, the terminal may need to access the network through two 3GPP access type connections at the same time. In this case, dual-connectivity may have a plurality of combinations of access types. For example, terrestrial network (terrestrial network, TN) + TN, or NR+NR, or TN+non-terrestrial network (non-terrestrial network, NTN), or NR+satellite, or after a future 6G network application, dual-connectivity may also be a combination of networks of different standards, such as 5G+6G or 6G+satellite, and so on. For the two 3GPP access type connections, the connections may be to the same network or to different networks.

It can be understood that multi-connectivity may alternatively be expressed as: supporting dual (or multiple) radio capabilities (dual/multiple radio capability), supporting dual (or multiple) 3GPP access technologies (dual/multiple 3GPP RAT), supporting dual (or multiple) steering capabilities (dual/multiple steer), supporting dual (or multiple) 3GPP access (dual/multiple 3GPP), supporting dual (or multiple) 3GPP access types (dual/multiple 3GPP access type), supporting dual (or multiple) registrations (dual/multiple registration), supporting the same access type (same access type), supporting the same access technology (same RAT), supporting the same access network (same access network), etc. In other words, supporting one or more of the above can be understood as being capable of establishing multi-connectivity.

Establishing a multi-connectivity between the terminal and the cell may further be understood as that the terminal device separately establishes connections to the cell by using a plurality of pieces of subscription data. For example, multi-connectivity is a dual-connectivity. One terminal device has two SIM card modules, each SIM card module corresponds to one piece of subscription data, and the terminal device separately establishes connections to a cell by using two SIM card modules. Alternatively, one terminal device has two pieces of subscription data (for example, two SUPIs), and the terminal device separately accesses the cell by using the two pieces of subscription data (or establishes connections to the cell). Alternatively, two sets of user equipment are integrated into one terminal device. Each set of user equipment has one piece of subscription data, and each set of user equipment establishes a connection to the cell. In this case, the terminal device establishes two connections to the cell. In this case, it may be considered that the terminal device establishes dual-connectivity to the cell.

In a communication system, multi-connectivity establishment may be triggered in a plurality of manners, which are specifically as follows.
1) Triggered by registration:
   In the registration process, the terminal can actively report its capability information, for example, whether the terminal supports multi-connectivity. Alternatively, in a registration procedure of the terminal, the data management network element may determine, based on the subscription data of the terminal, whether the network can provide a multi-connectivity service for the terminal, that is, whether the terminal subscribes to a multi-connectivity service. Alternatively, in a registration procedure of the terminal, the data management network element may determine whether a network slice requested by the terminal requires a multi-connectivity service. On this basis, if at least one of the following conditions is met: the terminal supports multi-connectivity, the terminal subscribes to a multi-connectivity service, or a network slice requested by the terminal supports a multi-connectivity service, the data management network element may instruct, by using a registration procedure, the terminal to establish multi-connectivity. Optionally, the data management network element may further notify, by using a registration procedure, the terminal of a policy for establishing multi-connectivity, for example, an access type combination of multi-connectivity, and a time and/or a region in which multi-connectivity is allowed to be established. If the data management network element does not notify the terminal of the multi-connectivity policy, it indicates that the network has no policy limitation on establishing multi-connectivity by the terminal, and the terminal may determine to establish multi-connectivity by itself.
(2) Triggered by services:
   When the terminal uses some services that require relatively large network bandwidth, multi-connectivity may need to be used to expand bandwidth. Therefore, the terminal or the network may trigger establishment of multi-connectivity according to the service.

For example, the terminal may trigger, based on a URSP rule, the terminal to establish multi-connectivity. The URSP rule can be enhanced to include an indication for establishing multi-connectivity and a policy for establishing multi-connectivity. When the terminal determines that a session needs to be established for a service, if the service matches the URSP rule, the terminal establishes multi-connectivity according to an indication of the URSP rule.

For example, if the access network device finds that the service of the terminal cannot be ensured, for example, bandwidth that can be provided by the access network device cannot meet a bandwidth requirement of the service, the access network device may report the situation to the data management network element by using the access and mobility management network element. Alternatively, if the access and mobility management network element finds that the service of the terminal cannot be guaranteed, for example, the terminal currently moves to a low-signal area and signal quality of the terminal cannot guarantee the service, the access and mobility management network element may report the situation to the data management network element. In this way, the data management network element may instruct the terminal to establish multi-connectivity. Optionally, the data management network element may further notify the terminal of a policy for establishing multi-connectivity.

For example, in a process of establishing a session, the terminal may report, to the data management network element or the policy control network element, the S-NSSAI and the DNN that are corresponding to the session of the terminal. If the service corresponding to the S-NSSAI and the DNN is a service that requires establishment of multi-connectivity, the data management network element or the policy control network element may instruct the terminal to establish multi-connectivity. Optionally, the data management network element or the policy control network element may further notify the terminal of a policy for establishing multi-connectivity.

### 3) Triggered by the user:

The terminal can enable or disable the multi-connectivity function for the user. If the user operation enables multi-connectivity, the terminal may respond to the operation of the user, and trigger multi-connectivity establishment. Afterwards, if the user operates to disable multi-connectivity, the terminal may respond to the user operation, trigger release of multi-connectivity, and restore to establishing a single connection with the network, that is, establish a connection of a 3GPP access type or a non-3GPP access type with the network.

The following further describes the communication method and apparatus in the embodiments of this application with reference to the accompanying drawings. It may be understood that, in this application, an example in which the network device and the terminal are used as executors of the interaction schematic diagram is used as an example for description. However, this application does not limit the executors of the interaction schematic diagram. For example, the method performed by the network device in this application may alternatively be performed by a module (for example, a chip, a chip system, or a processor) applied to the network device, or may alternatively be implemented by a logical node, a logical module, or software that can implement all or some functions of the network device. A method performed by the terminal in this application may alternatively be performed by a module (for example, a chip, a chip system, or a processor) applied to the terminal, or may alternatively be implemented by a logical node, a logical module, or software that can implement all or some terminal functions.

Below, through the method embodiment, the interaction process between the network elements/devices in the aforementioned communication system will be specifically introduced. The communication method provided in the embodiments of this application can be applied to the aforementioned communication system, and specifically applied to various scenarios mentioned in the aforementioned communication system. The following provides a specific introduction.

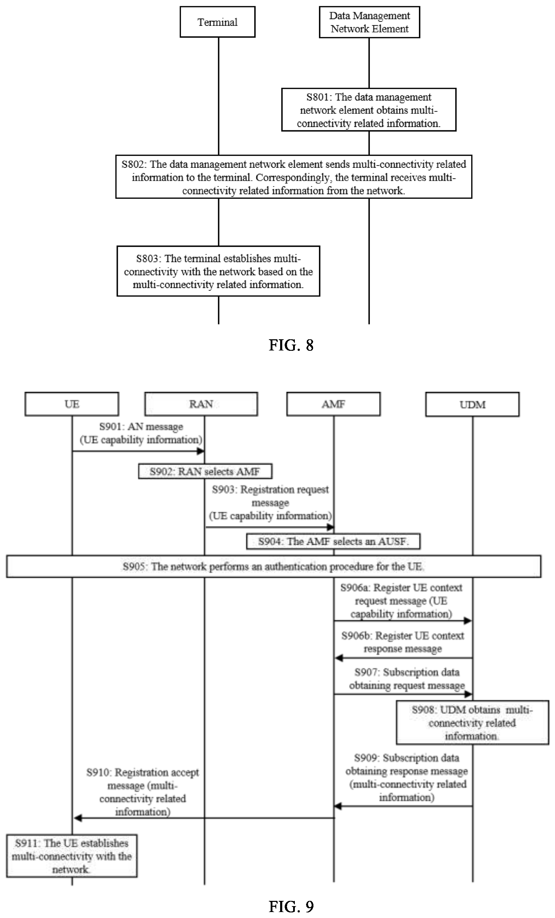

FIG. 8 is a schematic flowchart of a communication method according to an embodiment of this application. The communication method is applicable to the foregoing communication system, and mainly involves interaction between a data management network element and a terminal.

S801: The data management network element obtains multi-connectivity related information.

Multi-connectivity may refer to separately establishing connections of 3GPP access types with a plurality of cells at the same time, or using multiple 3GPP access types to separately access the network, such as multiple cells in the network. The multiple cells may be in the same network, such as cells in the same PLMN, or may be cells in different networks. This is not limited.

The multi-connectivity related information may include indication information and/or policy information.

The indication information may be used to indicate that the terminal needs to establish multi-connectivity. The indication information may be a 1-bit (bit) information element. If a value of the information element is 1, it indicates that the terminal needs to establish multi-connectivity, and if a value of the information element is 0, it may be understood as that there is no indication information in this case, or the indication information indicates that the terminal does not need to establish multi-connectivity.

The policy information is used to indicate a policy for establishing multi-connectivity. For example, the policy information may include at least one of a service policy, an access type policy, a location policy, or a time policy.

The service policy may mean that multi-connectivity needs to be established when the network cannot meet the service requirement, that is, to implement establishment according to the service requirement, and avoid redundancy. For example, the service policy may be a service threshold. If the threshold is exceeded, it is considered that the network cannot meet the service requirement, and multi-connectivity establishment needs to be triggered. For example, the service threshold may be a delay threshold. In this case, if a transmission delay of the service (such as the transmission delay over the air interface or the transmission delay from the user plane anchor point to the terminal) exceeds the threshold, the current network cannot meet service requirements, for example, network congestion occurs. For another example, the service threshold may also be a threshold of a parameter such as bandwidth and a packet loss rate. In this case, if the bandwidth that can be provided by the network for the service is less than the bandwidth threshold, and/or the packet loss rate of the service is greater than the packet loss rate threshold, the current network cannot meet a service requirement. Certainly, the foregoing specific implementation of the service threshold is merely some examples, and is not intended as a limitation on this embodiment of this application. Any parameter that may be used to evaluate whether the network can meet the requirement of the service may be considered as the threshold in this embodiment of this application. such as the waiting duration of the service data packet and the number of retransmission times of the service data packet.

Access type policy refers to the combination of access types required to establish multi-connectivity. For example, in the case where multi-connectivity refers to dual-connectivity, the access type combination can be TN+TN, or TN+NTN, or in the future, after the application of 6G networks, dual-connectivity can also be a combination of different network standards, such as 5G+6G or 6G+satellite, etc. Of course, in the case where multi-connectivity refers to three or more 3GPP access type connections, the access type combination can include more 3GPP access type combinations, such as TN+TN+TN, or TN+TN+NTN, or NTN+NTN+NTN, or 4G+5G+6G, or 5G+6G+satellite, etc. These combinations can be arbitrarily arranged according to actual needs, and so on, without further elaboration. In this way, the decoupling of access resources can be achieved, that is, different 3GPP access type connections use different network resources, avoiding the situation where all connections use the same access type, which could lead to network resource shortages.

The location policy refers to the requirement that multi-connectivity needs to be established within a preset area. For example, this may be a low-signal area where communication signal enhancement is required, in order to ensure the communication quality of users within this area. For example, the location policy may include information used to indicate the location of the preset area, such as information that can be recognized by the network, such as the identifier of a cell, or it may also be any other possible location information, such as latitude and longitude information.

The time policy refers to the requirement that multi-connectivity needs to be established within a preset time period. For example, this may be a time period with high service demand, in order to ensure the service experience within this time period. For example, the time policy may include information used to indicate the preset time period. For example, the preset time period may be a periodic time period, and the information used to indicate the preset time period may include information about the interval duration between adjacent periods, and information about the time period within each period when multi-connectivity needs to be established. For example, this may be a time period from tl to t2 after the start time of each period, or it may be a time period from t1 to t2 before the end time of each period.

It can be understood that, for the aforementioned indication information and policy information, if the multi-connectivity related information includes the indication information, then the policy information may be optional information. If the multi-connectivity related information carries the policy information, it indicates that the subsequent terminal needs to establish multi-connectivity as necessary according to the indication of the policy information. If the multi-connectivity related information does not carry the policy information, it indicates that the network does not impose any policy restrictions on the terminal establishing multi-connectivity, and the terminal can make its own decision to establish multi-connectivity.

S802: The data management network element sends the multi-connectivity related information to the terminal. Correspondingly, the terminal receives the multi-connectivity related information from the network.

S803: The terminal establishes multi-connectivity with the network based on the multi-connectivity related information.

In summary, on the network side, the data management network element can deliver the multi-connectivity related information, such as the indications and policies required for establishing multi-connectivity, to the terminal. This enables the terminal to respectively establish 3GPP access-type connections with multiple cells based on the related information at the same time. In other words, the terminal can simultaneously maintain connections with multiple cells to meet more flexible and diverse communication requirements in the future.

Below, each step will be introduced separately.

S801:
The method by which the data management network element obtains the multi-connectivity related information can vary. For example, it can be triggered by the reporting of the terminal, or it can be triggered by the reporting of other network elements on the network side. Alternatively, the data management network element can decide by itself to trigger the acquisition of the related information. The following sections will introduce these methods separately.

Manner 1: The terminal may send the capability information of the terminal to the network. Correspondingly, the data management network element may obtain the capability information of the terminal, and obtain the multi-connectivity related information according to the capability information of the terminal.

The capability information of the terminal (or the multi-connectivity capability of the terminal) can be used to indicate whether the terminal supports respectively establishing connections of 3GPP access types to a plurality of cells at the same time, so as to avoid waste of communication resources caused by instructing the terminal to establish multi-connectivity when the terminal does not support multi-connectivity. For example, the capability information of the terminal may be a 1-bit information element, and values 0 and 1 of the information element are respectively used to indicate whether the terminal supports separate establishment of connections of 3GPP access types to multiple cells at the same time, that is, whether multi-connectivity is supported.

The capability information of the terminal may be reported to the network through a registration procedure. For example, in a registration process of the terminal, the terminal may send a registration request message to the access and mobility management network element. In this case, the capability information of the terminal may be carried in the registration request message as an independent information element. Alternatively, the capability information of the terminal may be carried as an information element in radio capability reporting of the terminal. After receiving the capability information of the terminal, the access and mobility management network element may report the capability information of the terminal to the data management network element when re gistering the context of the terminal to the data management network element. In other words, in a terminal registration process, the data management network element may receive a context registration request message from the access and mobility management network element, where the context registration request message includes the capability information of the terminal, that is, an existing registration procedure is reused to implement awareness of the multi-connectivity capability of the terminal; or it can also be implemented through a newly defined process, which is decoupled from the existing process and allows more flexible information element transmission.

When the data management network element determines, based on the capability information of the terminal, that the terminal supports multi-connectivity, it obtains the related information of multi-connectivity. For example, the data management network element may obtain, from a local location, the multi-connectivity related information that has been pre-configured. Alternatively, the data management network element may obtain the multi-connectivity related information from other network elements, such as from a data storage network element. This is not limited. Of course, if the capability information of the terminal indicates that the terminal does not support multi-connectivity, then the data management network element does not need to obtain the multi-connectivity related information for the terminal. Alternatively, the data management network element can still obtain the multi-connectivity related information (for example, it can be obtained in advance by delivering it to other terminals that support multi-connectivity), but there is no need to subsequently deliver this related information to the terminal that does not support multi-connectivity.

Manner 2: The terminal may send information about the slice of the terminal to the network. Correspondingly, the data management network element may obtain the slice information requested by the terminal, and obtain the multi-connectivity related information based on the fact that the network slice is a slice corresponding to a multi-connectivity service.

The slice information requested by the terminal can be used to indicate the network slice requested by the terminal, for example, one or more network slices. For example, the terminal may indicate, in a registration request message, that it requests to use S-NSSAI#1 and/or S-NSSAI#2.

The slice information requested by the terminal can also be reported to the network through the registration procedure. For example, in a terminal registration process, the terminal may send, to the access and mobility management network element, a registration request message that carries slice information requested by the terminal. After receiving the slice information requested by the terminal, the access and mobility management network element may report the capability information of the terminal to the data management network element when registering the context of the terminal with the data management network element. In other words, in a terminal registration process, the data management network element may receive a context registration request message from the access and mobility management network element, where the context registration request message includes slice information requested by the terminal, that is, an existing registration procedure is reused to implement awareness of a multi-connectivity requirement of the terminal; or it can also be implemented through a newly defined process, which is decoupled from the existing process and allows more flexible information element transmission.

The data management network element may determine, based on the correspondence between a network slice and a service, whether a network slice corresponding to a service that requires establishment of multi-connectivity (or a service that requires establishment of multi-connectivity) exists in the network slice requested by the terminal. For example, a service for which multi-connectivity needs to be established is an extended reality media service (extended reality media services, XRM), and a bandwidth requirement corresponding to the XRM service is relatively high. Therefore, multi-connectivity needs to be established to ensure a large bandwidth, so as to meet the bandwidth requirement corresponding to the XRM service. In this case, the XRM service can be regarded as a multi-connectivity service. Certainly, the XRM service is merely an example, and is not limited. A specific service form of the multi-connectivity service is not limited in this embodiment of this application. If the network slice requested by the terminal includes the network slice corresponding to the multi-connectivity service, the data management network element may obtain the multi-connectivity related information. For a specific obtaining manner, refer to the related description of the manner 1, and details are not described herein again.

Manner 3: The data management network element can obtain the subscription data of the terminal, and based on this subscription data, obtain multi-connectivity related information.

The subscription data of the terminal refers to the relevant data obtained by the terminal in advance when it subscribes to network services. This data can be pre-stored in the data management network element. If the subscription data of the terminal includes information used to indicate that the network can provide the terminal with multi-connectivity services, it means that the terminal is a user who has subscribed to multi-connectivity services, or that the terminal has subscribed to multi-connectivity services. This is done to avoid communication redundancy caused by sending multi-connectivity related information to users who have not subscribed to such services. If the subscription data of the terminal does not include information used to indicate that the network can provide the terminal with multi-connectivity services, it means that the terminal has not subscribed to multi-connectivity services. Of course, this information can also be a 1-bit information element. By default, the subscription data of the terminal includes this information. In this case, the two possible values of 0 or 1 for this information can be used to indicate whether the terminal has subscribed to multi-connectivity services. Alternatively, if the subscription data of the terminal includes information about a service that requires the establishment of multi-connectivity, such as an XRM service, it can also be considered that the terminal has subscribed to multi-connectivity services.

The data management network element can obtain the subscription data of the terminal during the registration process of the terminal. For example, during the registration process of the terminal, the access and mobility management network element may send a subscription data obtaining request message to the data management network element, in order to request the subscription data of the terminal with the network. Correspondingly, the data management network element may receive the subscription data obtaining request message from the access and mobility management network element, and obtain the subscription data of the terminal according to the subscription data obtaining request message. In this way, the data management network element can determine whether the subscription data of the terminal includes information used to indicate that the network can provide the terminal with multi-connectivity service, or determine the value of the information, that is, reusing an existing registration procedure to implement awareness of the subscription data of the terminal. Alternatively, it may also be implemented through a newly defined procedure, which is decoupled from the existing procedure, and the transfer of information elements can be more flexible. If the subscription data of the terminal includes information used to indicate that the network can provide the terminal with multi-connectivity service, or if the value of the information is determined to indicate that the terminal has subscribed to the multi-connectivity service, then the data management network element can obtain the multi-connectivity related information. For specific obtaining methods, refer to the relevant introduction of manner 1 above, and details are not described herein again.

It can be understood that the foregoing manner 1 to manner 3 all obtain multi-connectivity related information in a registration procedure of a terminal. That is, it can be understood as that multi-connectivity related information is obtained by reusing the registration procedure of the terminal.

Manner 4: The data management network element may receive service information from the access and mobility management network element, and obtain multi-connectivity related information based on the service information.

The service information is used to indicate that the network cannot meet a service requirement of the terminal. For example, the bandwidth provided by the network for the terminal cannot meet a bandwidth requirement of the service of the terminal, and/or the signal quality of the network cannot meet a signal quality requirement of the service of the terminal, or there may be any other possible situation, which is not limited herein. In this case, the network needs to provide additional network resources through multi-connectivity to meet the service requirement of the terminal. For example, the service information may be a bitmap of multiple bits of an enumerated type, to indicate, by using different value combinations of the bitmap, various situations in which the network cannot meet the service requirement of the terminal. For example, the bitmap may be two bits, where 00 indicates that the bandwidth provided by the network for the terminal cannot meet the bandwidth requirement of the service of the terminal; 01 indicates that the signal quality of the network cannot meet the signal quality requirement of the service of the terminal; 10 indicates that the bandwidth provided by the network for the terminal cannot meet the bandwidth requirement of the service of the terminal, and the signal quality of the network cannot meet the signal quality requirement of the service of the terminal; and 11 is reserved. For another example, the service information may be multiple bits of an enumerated type, and a value of each bit corresponds to a situation in which the network does not meet the service requirement of the terminal.

Optionally, when the bandwidth provided by the network for the terminal cannot meet the bandwidth requirement of the service of the terminal, the service information is further used to indicate a bandwidth that the network needs to provide additionally for the terminal, for example, information about the bandwidth is included. In this way, the network can determine a bandwidth that the terminal finally needs, so that the bandwidth can be provided by the subsequently established multi-connectivity, so as to ensure that the service requirement of the terminal can be met.

The service information may be reported by the access network device to the data management network element by using the access and mobility management network element, or may be directly reported by the access and mobility management network element to the data management network element.

For example, in the case that the access network device determines that the bandwidth that can be provided by the access network device for the terminal cannot meet the bandwidth requirement of the service of the terminal, the access network device may send an N2 message to the access and mobility management network element, where the N2 message includes the service information, to indicate that the bandwidth provided by the network for the terminal cannot meet the bandwidth requirement of the service of the terminal. Optionally, the service information is further used to indicate that the network needs to provide additional bandwidth for the terminal. For example, the access network device determines that the bandwidth that the access network device can currently provide for the terminal is 40 megabytes per second (million bits per second, Mbps), and configuration information of the service of the access network device indicates that the bandwidth required by the service of the terminal is 60 Mbps. It indicates that the bandwidth provided by the network for the terminal cannot meet the bandwidth requirement of the service of the terminal. In this case, the service information is further used to indicate that the network needs to provide additional 20 Mbps bandwidth for the terminal. Correspondingly, the access and mobility management network element may receive the N2 message from the access network device, and send the service information to the data management network element. In this case, the service information may be carried in any possible message exchanged between the access and mobility management network element and the data management network element. Alternatively, the access network device may not perceive the total bandwidth requirement of the terminal. When the bandwidth requested by the service exceeds the bandwidth that can be provided by the access network device, the access network device may report, to the access and mobility management network element, the bandwidth that can be provided by the access network device. The access and mobility management network element may calculate a difference between a total bandwidth requirement of the terminal and the currently satisfiable bandwidth, and the difference is the bandwidth to be additionally provided for the terminal.

For another example, the access and mobility management network element may perform mobility management on the terminal, to determine whether the terminal moves to a low-signal area. The low-signal area may be preconfigured in the access and mobility management network element. The low-signal area may be an area at a cell granularity, for example, including one or more cells, and may be represented by using a cell identifier, or the low-signal area may be an area demarcated by longitude and latitude information. This is not limited. If the terminal currently moves to a low-signal area, the access and mobility management network element may obtain service information according to the location of the terminal in the low-signal area, for example, obtain preconfigured service information locally or generate service information locally, and send the service information to the data management network element. In this case, the service information may be carried in any possible message exchanged between the access and mobility management network element and the data management network element, to indicate that signal quality of the network cannot meet a signal quality requirement of a service of the terminal.

It may be understood that, when obtaining the service information, the access and mobility management network element may also use the service information reported by the access network device, for example, the service information reported by the access network device indicates that the bandwidth provided by the network for the terminal cannot meet the bandwidth requirement of the service of the terminal. In addition, in this case, the access and mobility management network element also determines that the terminal moves to a low-signal area, and the access and mobility management network element may generate an indication for indicating that bandwidth provided by the network for the terminal cannot meet a bandwidth requirement of a service of the terminal. In addition, the signal quality of the network cannot meet the signal quality requirement of the service of the terminal.

When the data management network element obtains service information, the data management network element may obtain, based on the service information, multi-connectivity related information. A specific obtaining manner may refer to the related description of the foregoing manner 1, and details are not described herein again. Additionally, if the service information indicates that the network needs to additionally provide bandwidth for the terminal, the multi-connectivity related information may further include a traffic distribution ratio of the multi-connectivity, or a bandwidth distribution ratio. The traffic distribution ratio may be determined by the data management network element based on the bandwidth that the network needs to additionally provide for the terminal.

Of course, the access network device may also only report the bandwidth that the access network device can currently provide for the terminal. This bandwidth may be sent by the access and mobility management network element to the data management network element. In this case, the data management network element may determine the additional bandwidth that the network needs to provide for the terminal, and determine the offloading ratio based on the session context of the terminal, which indicates the bandwidth requirement of the service of the terminal, and the bandwidth that the access network device can currently provide for the terminal.

It can also be understood that the foregoing uses bandwidth and/or location as examples to describe whether a network can meet a service requirement. This is not intended to be limiting. Whether the network can meet the service requirement may also be implemented in other ways. For example, whether the transmission delay of the service on the network side meets the requirement of the transmission delay of the service, or whether the queuing waiting time of the data packet of the service meets the requirement of the queuing waiting time of the data packet of the service, etc. In other words, any parameter that can be used to represent whether the service requirement can be met by the network is applicable to the embodiments of this application.

Manner 5: The data management network element may obtain multi-connectivity related information based on a preset condition.

The preset condition may be preconfigured locally on the data management network element. Specifically, it may include at least one of the following: currently being within a time period in which the terminal needs to establish multi-connectivity, or a location of the terminal being within an area in which the terminal needs to establish multi-connectivity. That is, the data management network element may determine, based on the current time and the current location of the terminal, to trigger the terminal to establish multi-connectivity, thereby avoiding additional overheads caused by interaction with other network elements.

The time period in which the terminal needs to establish multi-connectivity is similar to the preset time period indicated by the above time policy, and can be referred to for understanding. Therefore, when the current time is the start time of the preset time period, the data management network element may obtain multi-connectivity related information. For a specific obtaining manner, refer to the related descriptions of the Manner 1 above. Details are not described herein again. For example, the preset time period is a time period from t1 to t2 after the start time of each cycle, for example, 18:00-22:00 every day. That is, the time period in which the user frequently uses the terminal. When the current time is 18:00, the data management network element may obtain multi-connectivity related information, and perform subsequent procedures in the embodiments of this application, to trigger the terminal to establish multi-connectivity, thereby ensuring the service experience of the user in the time period. Then, when the current time is 22:00, the data management network element may instruct the terminal to release multi-connectivity, to reduce communication overheads and facilitate terminal energy saving.

The area in which the terminal needs to establish multi-connectivity is similar to the preset area indicated by the aforementioned location policy. For example, if it is the aforementioned low-signal area, it can be understood with reference. The data management network element obtains the location of the terminal by subscribing to services from the access and mobility management network element related to the terminal (or the access and mobility management network element serving the terminal). Alternatively, the location of the terminal can be obtained through other means. For example, the access network device may report the location of the terminal to the data management network element through the access and mobility management network element. The specific method can be selected based on actual requirements, and no specific limitations are imposed herein. In this way, when the terminal currently moves into the preset area, the data management network element can obtain the multi-connectivity related information. For specific obtaining methods, refer to the relevant introduction of manner 1 above, and details are not described herein again.

Manner 6: The terminal sends S-NSSAI and/or DNN corresponding to the session of the terminal to the network. Correspondingly, the data management network element may obtain the S-NSSAI and/or DNN corresponding to the session of the terminal, and obtain the multi-connectivity related information based on whether the service of the terminal requires establishing multi-connectivity service.

The S-NSSAI and/or DNN may correspond to the service of the terminal, such as the service corresponding to the terminal being a multi-connectivity service.

The S-NSSAI and/or DNN corresponding to the session of the terminal can be reported to the network through a session establishment procedure. For example, in the process of establishing a session by the terminal, the terminal may send, to an access and mobility management network element, a PDU session establishment request message carrying the S-NSSAI and/or DNN. The access and mobility management network element may select a session management network element, and send the S-NSSAI and/or DNN to the session management network element through a PDU session establishment request message for creating a session context. After receiving the S-NSSAI and/or DNN, the session management network element may report the S-NSSAI and/or DNN to the data management network element when registering the session context of the terminal with the data management network element. In other words, in a process of registering the terminal, in a process of establishing a session of the terminal, the data management network element receives, from the session management network element, a context registration request message, where the context registration request message may include the S-NSSAI and/or DNN.

The data management network element may determine, based on the correspondence between the S-NSSAI or the DNN and the service, whether the service corresponding to the S-NSSAI and/or the DNN in the context registration request message is a multi-connectivity service, for example, an XRM service, or any other possible service. There is no limitation. If the service corresponding to the S-NSSAI and/or the DNN in the context registration request message is a multi-connectivity service, the data management network element may obtain the multi-connectivity related information. For a specific obtaining manner, reference may be made to the related description of the manner 1, and details are not described herein again.

Manner 7: When the terminal needs to establish multi-connectivity, the terminal may send request information to the network. Correspondingly, the data management network element may receive the request information from the terminal, and obtain multi-connectivity related information according to the request information.

The request information is used to indicate that the terminal requests to establish multi-connectivity. In other words, establishment of multi-connectivity may be triggered by the terminal itself, so that interaction between the terminal and a network side is simpler, and communication overheads may be lower. For example, the terminal may provide the user with a function of enabling or disabling multi-connectivity. For example, the terminal provides a multi-connectivity user interaction interface, and a button for enabling or disabling a multi-connectivity function is set on the user interaction interface. The user may choose to enable or disable a multi-connectivity function by clicking the button. For another example, the terminal may provide an interface for selecting a network mode. On the interface, if the user selects the network mode as multi-connectivity of a single network, it indicates that the multi-connectivity function is enabled; and if the user selects the network mode as single-connection of a single network, it indicates that the multi-connectivity function is disabled. In this case, you need to release multi-connectivity and establish a single connection. Alternatively, the function of enabling or disabling the multi-connectivity function by the user may be further implemented. This is not limited in this application.

If the user operation enables multi-connectivity, the terminal can respond to the operation of the user by sending a request message to the network. For example, it may send a UL NAS message carrying the request information to the access and mobility management network element. After obtaining the request information, the access and mobility management network element may send the request information to the data management network element. For example, it may send a subscription data obtaining request message carrying the request information. Correspondingly, the data management network element may receive the request information from the terminal. For example, it may receive a subscription data obtaining request message carrying the request information. In other words, this can be achieved by reusing existing signaling, or by defining a new process, which is decoupled from the existing process. This allows for more flexible information element transmission. The data management network element may obtain the multi-connectivity related information based on the request information. For specific obtaining methods, refer to the related introduction of manner 1 above, and details are not described herein again.

It can be understood that, since manner 7 is an active request by the terminal to establish multi-connectivity, the network does not need to additionally instruct the terminal to establish multi-connectivity. In other words, in manner 7, the multi-connectivity related information obtained by the data management network element may not include the above-mentioned indication information.

It should be noted that the foregoing manner 1 to manner 7 may also be implemented in a combined manner. For example, manner 1 and manner 2 are implemented in a combined manner. In this case, the data management network element may obtain the multi-connectivity related information when the terminal supports multi-connectivity, and the network slice requested by the terminal is the network slice corresponding to the multi-connectivity service. Another example is that manner 1 and manner 3 are implemented in a combined manner. In this case, the data management network element may obtain the multi-connectivity related information when the terminal supports multi-connectivity, and the terminal has subscribed to the multi-connectivity service. Yet another example is that manner 1, manner 2, and manner 3 are implemented in a combined manner. In this case, the data management network element may obtain the multi-connectivity related information when the terminal supports multi-connectivity, the network slice requested by the terminal is the network slice corresponding to the multi-connectivity service, and the terminal has subscribed to the multi-connectivity service. Of course, there are other combination manners, such as manner 1 and manner 4 being implemented in a combined manner, manner 1 and manner 5 being implemented in a combined manner, and so on. These can be referred to and understood, and will not be further described in the embodiments of this application.

S802:
sending, by the data management network element, multi-connectivity related information to the access and mobility management network element, for example, in a registration procedure, sending a subscription data obtaining response message carrying multi-connectivity related information, or in a session establishment procedure, sending a session management notify (Nudm_SDM_Notification notify) message carrying multi-connectivity related information, or the multi-connectivity related information may be carried in any possible message exchanged between the data management network element and the access and mobility management network element, which is not limited. Correspondingly, the access and mobility management network element receives the multi-connectivity related information returned by the data management network element according to the service information. The access and mobility management network element may send multi-connectivity related information to the terminal, for example, in a registration procedure, a registration accept message carrying multi-connectivity related information is sent, or in a session establishment procedure, a DL NAS message carrying multi-connectivity related information is sent, for example, a DL NAS transport container, or the multi-connectivity related information may be carried in any possible NAS message exchanged between the access and mobility management network element and the terminal. This is not limited.

S803:
S801 to S803 are performed when the terminal has accessed one cell, for example, the first cell. Therefore, after the terminal receives the multi-connectivity related information, the terminal may continue to select one or more second cells based on the multi-connectivity related information (For details about the selection method, see section 6. Cell Selection.), and accesses these second cells, that is, establishes connections of 3GPP access types to these second cells. In other words, establishing, by the terminal, multi-connectivity may also be understood as that the terminal selects a second cell, or the terminal selects a plurality of cells, or the like.

If the multi-connectivity related information indicates the policy information, the terminal may trigger, according to the policy information, establishment of multi-connectivity with the network. For example, the terminal triggers establishment of multi-connectivity with the network within a preset time period, within a preset area, or when the network cannot meet a service requirement of the terminal.

It may be understood that the foregoing uses interaction between the data management network element and the terminal as an example, and this is not limited. The data management network element may also be replaced with another network element, for example, a policy control network element. For example, the policy control network element may obtain the S-NSSAI and/or the DNN corresponding to the session of the terminal, where the S-NSSAI and/or the DNN correspond to the service of the terminal. In this way, the policy control network element may send the multi-connectivity related information to the terminal according to whether the service of the terminal is a service that requires establishment of multi-connectivity. A specific implementation principle is also similar to that of S801 to S803. For details, refer to the understanding, and details are not described herein again.

The foregoing describes, with reference to FIG. 8, the process flow of the communication method provided in the embodiments of this application. The following describes, with reference to FIG. 9 to FIG. 12, the specific process flow of the communication method provided in the embodiments of this application in specific scenarios.

### Scenario 1:

FIG. 9 is a second schematic flowchart illustrating a communication method provided in an embodiment of this application. In Scenario 1, the UDM (the data management network element mentioned above) may deliver the multi-connectivity related information to the UE (the terminal mentioned above) through the registration procedure of the UE.

### Scenario 1:

S901. The UE sends an AN message to the RAN (the access network device mentioned above).

An AN message may include a NAS message, such as a registration request message. Optionally, the registration request message may carry UE capability information (such as the capability information of the terminal mentioned above), which is used to indicate whether the UE supports multi-connectivity.

S902: The RAN selects an AMF (the aforementioned access and mobility management network element).

Among them, the specific implementation principle of S902 can refer to the relevant descriptions in the registration procedure defined by 3GPP. Details are not described herein again.

S903: The RAN sends a registration request message to the AMF.

S904: The AMF selects an AUSF.

S905. The network performs an authentication procedure for the UE.

The specific implementation principles of S903 to S805 can refer to the relevant descriptions in the registration procedure defined by 3GPP, and details are not described herein again.

S906a. The AMF sends a register UE context request message to the UDM.

In the case where the UE provides UE capability information, the register UE context request message may carry the UE capability information.

S906b. The UDM sends a register UE context response message to the AMF.

S907: The AMF sends a subscription data obtaining request message to the UDM.

Among them, the specific implementation principles of S906a to S907 can refer to the related descriptions in the registration procedure defined by 3GPP, and details are not described herein again.

S908: The UDM obtains the multi-connectivity related information.

The UDM may use one or more of the foregoing implementations in manner 1 to manner 3 and manner 5, to obtain the multi-connectivity related information. The specific implementation principles can refer to the related descriptions in S801, and details are not described herein again.

S909: The UDM sends a subscription data obtaining response message to the AMF.

The subscription data obtaining response message may carry multi-connectivity related information. For a specific implementation principle, refer to the related description in S802 above, and details are not described herein again.

S910: The AMF sends a registration accept message to the UE.

The registration accept message may carry multi-connectivity related information. For a specific implementation principle, refer to the related description in S802 above, and details are not described herein again.

S911: The UE establishes multi-connectivity with the network.

For a specific implementation principle of S911, refer to the related description in S803 above, and details are not described herein again.

### Scenario 2:

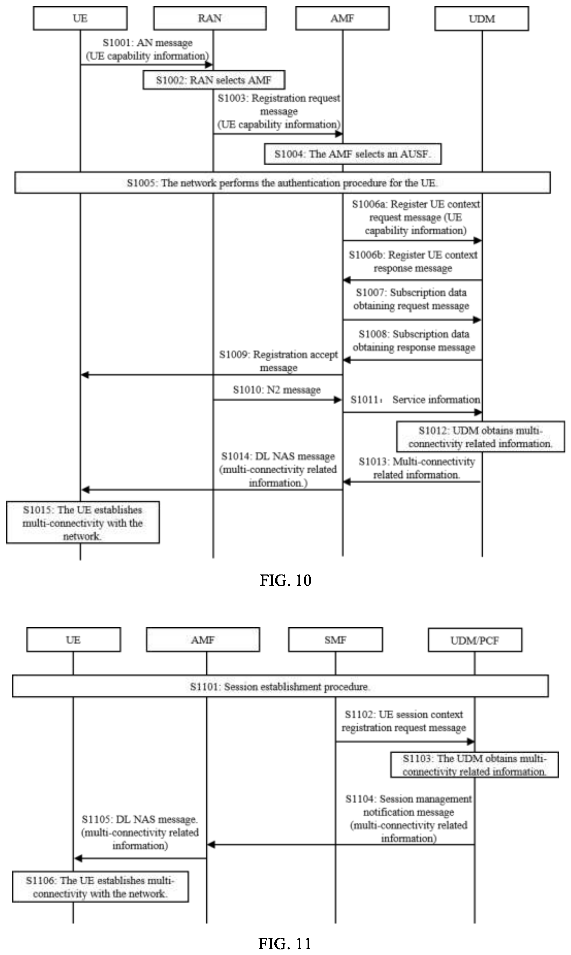

FIG. 10 is a schematic flowchart illustrating a communication method according to an embodiment of this application. In scenario 2, the UDM (the data management network element mentioned above) may trigger the delivery of multi-connectivity related information to the UE based on the information reported by the AMF (the access and mobility management network element mentioned above).

Specifically, as shown in FIG. 10, the process of the communication method is as follows:
S1001: The UE sends an AN message to the RAN (such as the access network device mentioned above).

The AN message may specifically include a NAS message, such as a registration request message. Optionally, the registration request message may carry capability information of the UE (such as the capability information of the terminal mentioned above), which is used to indicate whether the UE supports multi-connectivity.

S1002: The RAN selects an AMF (as described above, the access and mobility management network element).

Among them, the specific implementation principle of S1002 can refer to the relevant descriptions in the registration procedure defined by 3GPP. Details are not described herein again.

S1003: The RAN sends a registration request message to the AMF.

S1004: The AMF selects the AUSF.

S1005: The AUSF triggers the execution of an authentication procedure for the UE.

Among them, for the specific implementation principles of S903 to S805, refer to the related descriptions in the registration procedure defined by 3GPP. Details are not described herein again.

S1006a: The AMF sends a register UE context request message to the UDM.

When the UE provides the UE capability information, the UE context request message may carry the UE capability information.

S1006b: The UDM sends a register UE context response message to the AMF.

S1007: The AMF sends a subscription data obtaining request message to the UDM. S1008: The UDM sends a subscription data obtaining response message to the AMF. S1009: The AMF sends a registration accept message to the UE.

Among them, the specific implementation principles of S1006a to S1009 can refer to the relevant descriptions in the registration procedure defined by 3GPP, and details are not described herein again.

S1010: The RAN sends an N2 message to the AMF.

The N2 message may carry service information, which is used to indicate that the network cannot meet the service requirement of the UE.

S1011: The AMF sends service information to the UDM.

S1012: The UDM obtains multi-connectivity related information.

Among them, the specific implementation principles of S1010 to S1012 can refer to the related descriptions of manner 4 in S801 mentioned above. This details are not described herein again.

S1013: The UDM sends multi-connectivity related information to the AMF.

S1014: The AMF sends a DL NAS message to the UE.

The DL NAS message carries multi-connectivity related information.

The specific implementation principles of S1013 to S1014 can refer to the relevant descriptions in S802 above, and details are not described herein again.

S1015: The UE establishes multi-connectivity with the network.

The specific implementation principles of S1015 can also refer to the relevant descriptions in S803 above, and details are not described herein again.

### Scenario 3:

FIG. 11 is a schematic flowchart illustrating a communication method according to an embodiment of this application. In scenario 3, the UDM (the data management network element mentioned above) can deliver the multi-connectivity related information to the UE through the session establishment procedure of the UE (the terminal mentioned above).

Specifically, as shown in FIG. 11, the process of the communication method is as follows:
S1101: Session establishment procedure.

The session establishment procedure may include performing the S401-S416b shown in FIG. 4 above. For specific details, please refer to the relevant descriptions in FIG. 4 above, which are not described herein again.

S1102: The SMF sends a UE session context registration request (Nudm_UECM_Registration request) message to the UDM.

The UE session context registration request may carry the UE's S-NSSAI/DNN (the S-NSSAI/DNN of the terminal mentioned above).

S1103: The UDM obtains multi-connectivity related information.

Among them, the specific implementation principles of S1102 to S1103 can refer to the related descriptions of manner 6 in S801 above, and details are not described herein again.

S1104: The UDM sends a session management notification message to the AMF.

S1105: The AMF sends a DL NAS message to the UE.

The DL NAS message carries multi-connectivity related information.

The specific implementation principles of S1104-S1105 can refer to the relevant descriptions in S802 above, and details are not described herein again.

S1106: The UE establishes multi-connectivity with the network.

Among them, the specific implementation principles of S1106 can also refer to the relevant descriptions in S803 above, and details are not described herein again.

It can be understood that the UDM shown in FIG. 11 can also be replaced with a PCF. In this case, the differences from the UDM execution are as follows: the PCF can obtain session-related information from the SM policy association, for example, obtaining the UE's S-NSSAI/DNN from the policy association establishment request message S407 mentioned above, and then obtaining the session-related information. The PCF can continue to use the same method as the UDM to deliver the session-related information to the UE. Alternatively, the PCF may also carry the session-related information in the SM policy through the policy association establishment response message mentioned above in S407, and then send the information to the SMF first, and then the SMF sends the information to the UE through the AMF, as shown in the process described in S411-S413 above.

### Scenario 4:

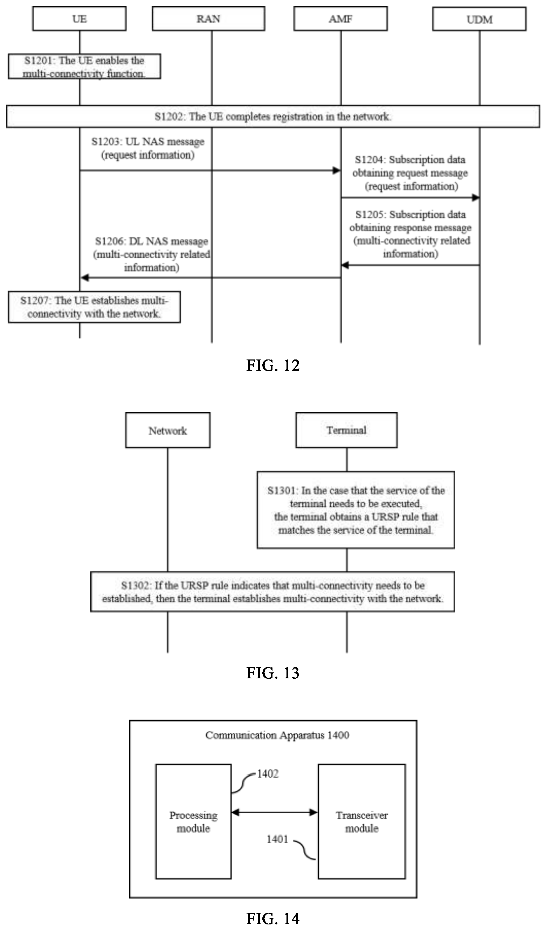

FIG. 12 is a schematic flowchart illustrating a communication method according to an embodiment of this application. In scenario 4, the UDM (the data management network element mentioned above) may trigger the delivery of multi-connectivity related information to the UE based on the UE's (the terminal mentioned above) request to establish multi-connectivity.

Specifically, as shown in FIG. 12, the process of the communication method is as follows:
S1201: The UE enables the multi-connectivity function.

S1202: The UE completes registration in the network.

Among them, for the specific implementation principle of S1201, refer to the related description of manner 7 in the foregoing S801. Details are not described herein again. For the specific implementation principle of S1202, refer to the related description of the registration procedure defined in 3GPP. Details are not described herein again. Additionally, the execution sequence of S1201 and S1202 is not limited.

S1203: The UE sends a UL NAS message to the AMF.

S1204: The AMF sends a subscription data obtaining request message to the UDM.

The UL NAS message and the subscription data obtaining request message carry the request information of the UE. For the specific implementation principle, refer to the related description of manner 7 in the foregoing S801. Details are not described herein again. S1205: The UDM sends a subscription data obtaining response message to the AMF. S1206: The AMF sends a DL NAS message to the UE.

The DL NAS message carries multi-connectivity related information.

The specific implementation principles of S1205 to S1206 can refer to the relevant descriptions in S802 above, and details are not described herein again.

S1207: The UE establishes multi-connectivity with the network.

Among them, the specific implementation principles of S1207 can also refer to the relevant descriptions in S803 above, and details are not described herein again.

FIG. 13 is a schematic flowchart 6 of a communication method according to an embodiment of this application. The communication method is applicable to the foregoing communication system, and mainly relates to interaction between a terminal and a network.

S1301. When a service of the terminal needs to be executed, the terminal obtains a URSP rule matching the service of the terminal.

The URSP rule may be an enhanced URSP rule, and the URSP rule may indicate multi-connectivity. For example, it is defined that the terminal needs to establish connections of 3GPP access types to a plurality of cells in a network at the same time. In other words, a meaning similar to the foregoing indication information may also refer to understanding for details. Details are not described again. Optionally, the URSP rule may further indicate multi-connectivity policy information, for example, an access type combination required for establishing multi-connectivity, or another policy. For details, refer to related description of the policy information. Details are not described herein again.

When the terminal needs to perform a service, for example, the terminal starts an application, such as an XRM application or any other possible application, in response to an operation of the user, the terminal needs to perform a service corresponding to the application, such as an XRM service or any other possible service. In this case, the terminal may determine the URSP rule based on the traffic descriptor. For example, the terminal matches, based on a service feature indicated by the traffic descriptor, a URSP rule similar to the service feature, that is, determines the URSP rule matching the service.

S1302: If the URSP rule indicates that multi-connectivity needs to be established, the terminal establishes multi-connectivity with the network.

If the URSP rule that matches the service is the enhanced URSP rule mentioned above, the terminal may, according to the indication of the URSP rule (for example, based on policy information or the terminal's own decision), establish multi-connectivity with the network. The specific implementation principle is similar to that of S803 above, and can be referred to for understanding. Details are not described herein again.

It can be understood that, in this embodiment of this application, the URSP rule is used as an example, but is not limited thereto. Any policy and/or rule that is similar to the URSP rule or that can implement a routing function can be used to implement the solutions in this application.

In summary, the terminal may perform URSP rule matching. When a service matches a URSP rule that needs to establish multi-connectivity, the terminal triggers the establishment of multi-connectivity with the network side, in order to ensure that multi-connectivity can meet the requirement of the service, and ensure the experience of the user.

A possible design solution is as follows: with reference to the above S1301-S1302, before S1301, the method may further include: in a case in which the URSP rule of the terminal needs to be updated, the policy control network element may obtain a new URSP rule of the terminal, and send the new URSP rule to the terminal. Correspondingly, the terminal may further receive the URSP rule from the network, and configure the URSP rule locally on the terminal. At this time, the new URSP rule may be the enhanced URSP rule mentioned above. The policy control network element may obtain the new URSP rule from the application function, or the new URSP rule may be manually configured and sent to the PCF by a person. This is not limited.

The foregoing describes, with reference to FIG. 8 to FIG. 13, the communication method provided by the embodiments of this application. The following describes, with reference to FIG. 14 to FIG. 15, the communication apparatus used to execute the communication method provided by the embodiments of this application.

FIG. 14 is a schematic structural diagram 1 of a communication apparatus according to an embodiment of this application. For example, as shown in FIG. 14, the communication apparatus 1400 includes a transceiver module 1401 and a processing module 1402. For ease of description, FIG. 14 shows only the main components of the communication apparatus.

In a first possible embodiment, the communication apparatus 1400 may be applicable to the data management network element in the foregoing communication method, to implement a function of the data management network element. The details are as follows.

The processing module 1402 is configured to obtain multi-connectivity related information. The transceiver module 1401 is configured to send the related information to the terminal. The related information includes indication information and/or policy information. The indication information is used to indicate that the terminal needs to establish multi-connectivity. The policy information is used to indicate a policy for establishing multi-connectivity. Multi-connectivity refers to separately establishing connections of 3rd Generation Partnership Project 3GPP access types with a plurality of cells at the same time.

In one possible design scheme, the policy information may include at least one of the following: a service policy, an access type policy, a location policy, or a time policy. Among them, the service policy refers to the establishment of multi-connectivity when the network cannot meet a service requirement. The access type policy refers to the combination of access types required to establish multi-connectivity. The location policy refers to the establishment of multi-connectivity within a preset area. The time policy refers to the establishment of multi-connectivity within a preset time period.

In one possible design scheme, the processing module 1402 is configured to obtain capability information of a terminal, and obtain related information based on the capability information of the terminal. The capability information of the terminal is used to indicate that the terminal supports simultaneously establishing connections of 3GPP access types with multiple cells.

Optionally, the transceiver module 1401 is configured to: in a process of terminal registration, receive a context registration request message from an access and mobility management network element. The context registration request message includes capability information of the terminal.

In a possible design solution, the processing module 1402 is configured to: obtain slice information requested by the terminal, and obtain related information based on the network slice being a slice corresponding to a multi-connectivity service. The slice information requested by the terminal is used to indicate a network slice requested by the terminal.

Optionally, the transceiver module 1401 is configured to receive, by a data management network element, a context registration request message from an access and mobility management network element in a terminal registration process. The context registration request message includes slice information requested by the terminal.

In a possible design solution, the processing module 1402 is configured to: obtain subscription data of the terminal, and obtain related information based on the subscription data of the terminal. The subscription data of the terminal includes information used to indicate that the network can provide a multi-connectivity service for the terminal.

Optionally, the transceiver module 1401 is configured to: in a terminal registration process, receive a subscription data obtaining request message from an access and mobility management network element, and obtain subscription data of the terminal according to the subscription data obtaining request message. The subscription data obtaining request message is used to request data for subscription between the terminal and the network.

In one possible design scheme, the transceiver module 1401 is configured to receive service information from an access and mobility management network element. The processing module 1402 is configured to obtain related information based on the service information. The service information is used to indicate that the network cannot meet the service requirement of the terminal.

Optionally, the network cannot meet the service requirement of the terminal includes: the bandwidth provided by the network for the terminal cannot meet a bandwidth requirement of the service of the terminal, and/or, the signal quality of the network cannot meet a signal quality requirement of the service of the terminal's service, or there may be any other possible situation, which is not limited herein.

Optionally, when the bandwidth provided by the network for the terminal cannot meet the bandwidth requirement of the service of the terminal, the service information is further used to indicate that the network needs to additionally provide the terminal with bandwidth.

In one possible design scheme, the processing module 1402 is configured to obtain related information based on a preset condition. The preset conditions include at least one of the following: currently being within a time period in which the terminal needs to establish multi-connectivity, or a location of the terminal being within an area in which the terminal needs to establish multi-connectivity.

Optionally, the processing module 1402 is configured to obtain the location of the terminal from the access and mobility management network element related to the terminal by using a subscription service. Alternatively, the location of the terminal may be obtained in another manner.

In a possible design solution, the processing module 1402 is configured to obtain the S-NSSAI single network slice selection assistance information and DNN data network name corresponding to the session of the terminal, and obtain the related information according to the service of the terminal being a service that requires establishment of multi-connectivity, where the S-NSSAI and the DNN correspond to the service of the terminal.

Optionally, the transceiver module 1401 is configured to: in a session establishment process of the terminal, the data management network element receives, from the session management network element, a context registration request message, where the context registration request message includes the S-NSSAI and the DNN.

In a possible design solution, the transceiver module 1401 is configured to receive request information from a terminal. The processing module 1402 is configured to obtain related information according to the request information. The request information is used to indicate that the terminal requests to establish multi-connectivity.

Optionally, the transceiver module 1401 is configured to receive a subscription data management obtaining request message from an access and mobility management network element. The subscription data management obtaining request message includes request information.

Optionally, the transceiver module 1401 may further include a sending module (not shown in FIG. 14) and a receiving module (not shown in FIG. 14). The sending module is configured to implement a sending function of the communication apparatus 1400. The receiving module is configured to implement a receiving function of the communication apparatus 1400.

Optionally, the communication apparatus 1400 may further include a storage module (not shown in FIG. 14). The storage module stores a program or instructions. When the processing module 1402 executes the program or instructions, the communication apparatus 1400 can perform the functions in the methods shown in FIG. 6 to FIG. 8.

It can be understood that the communication apparatus 1400 may be a network device, or may be a chip (system) or another part or component that can be disposed in a network device. Alternatively, the communication apparatus 1400 may be an apparatus that includes a network device. This is not limited in this application.

Furthermore, the technical effects of the communication apparatus 1400 can refer to the technical effects of the communication method mentioned above. Details are not described herein again.

In a second possible embodiment, the communication apparatus 1400 may be applicable to the access and mobility management network element in the communication method mentioned above, thereby implementing the functions of the access and mobility management network element. The details are as follows.

The transceiver module 1401 is configured to send service information to a data management network element, receive multi-connectivity related information returned by the data management network element based on the service information, and send the related information to the terminal. The service information indicates that the network cannot meet a service requirement of the terminal. The related information includes indication information and/or policy information. The indication information is used to indicate that the terminal needs to establish multi-connectivity. The policy information is used to indicate a policy for establishing multi-connectivity. Multi-connectivity refers to separately establishing connections of 3rd Generation Partnership Project 3GPP access types with a plurality of cells at the same time.

In a possible design solution, the transceiver module 1401 is configured to receive an N2 message from an access network device, where the N2 message includes service information, and the service information is specifically used to indicate that the bandwidth provided by the network for the terminal cannot meet a bandwidth requirement of a service of the terminal.

Optionally, the service information is further used to indicate that the network needs to additionally provide bandwidth for the terminal.

In a possible design solution, the processing module 1402 is configured to obtain the service information based on that the terminal is located in a low signal area. Specifically, the service information is used to indicate that the signal quality of the network cannot meet a signal quality requirement of the service of the terminal.

Optionally, the transceiver module 1401 may include a sending module (not shown in FIG. 14) and a receiving module (not shown in FIG. 14). The sending module is configured to implement a sending function of the communication apparatus 1400. The receiving module is configured to implement a receiving function of the communication apparatus 1400.

Optionally, the communication apparatus 1400 may further include a storage module (not shown in FIG. 14), and the storage module stores a program or instructions. When the processing module 1402 executes the program or instructions, the communication apparatus 1400 can perform the functions in the methods shown in FIG. 6 to FIG. 8.

It can be understood that the communication apparatus 1400 may be a network device, or may be a chip (system) or another part or component that can be disposed in a network device, or may be an apparatus that includes a network device. This is not limited in this application.

Furthermore, the technical effects of the communication apparatus 1400 can refer to the technical effects of the communication method mentioned above. Details are not described herein again.

In a third possible embodiment, the communication apparatus 1400 may be applicable to the policy control network element in the communication method mentioned above, thereby implementing the functions of the policy control network element. The details are as follows.

The processing module 1402 is configured to obtain the S-NSSAI single network slice selection assistance information and DNN data network name corresponding to the session of the terminal. The processing module 1402 is further configured to determine, based on the service of the terminal being a service that requires the establishment of multi-connectivity. If such a service is required, the processing module 1402 controls the transceiver module 1401 to send multi-connectivity related information to the terminal. Here, the S-NSSAI and DNN correspond to the service of the terminal. The related information includes indication information and/or policy information. The indication information is used to indicate that the terminal needs to establish multi-connectivity. The policy information is used to indicate the policy for establishing multi-connectivity. Multi-connectivity refers to separately establishing connections of 3rd Generation Partnership Project 3GPP access types with a plurality of cells at the same time.

In one possible design solution, the transceiver module 1401 is configured to: during the process of establishing or modifying a session policy of the terminal, the policy control network element receives the S-NSSAI and DNN from the session management network element.

Optionally, the policy information includes at least one of the following: a service policy, an access type policy, a location policy, or a time policy. The service policy refers to that multi-connectivity needs to be established in the case that the network cannot meet a service requirement. The access type policy refers to a combination of access types required for establishing multi-connectivity. The location policy refers to that multi-connectivity needs to be established in a preset area. The time policy refers to that multi-connectivity needs to be established in a preset time period.

Optionally, the transceiver module 1401 may include a sending module (not shown in FIG. 14) and a receiving module (not shown in FIG. 14). The sending module is configured to implement a sending function of the communication apparatus 1400. The receiving module is configured to implement a receiving function of the communication apparatus 1400.

Optionally, the communication apparatus 1400 may further include a storage module (not shown in FIG. 14), and the storage module stores a program or instructions. When the processing module 1402 executes the program or instructions, the communication apparatus 1400 can perform the functions in the method shown in FIG. 6 to FIG. 8.

It can be understood that the communication apparatus 1400 may be a network device, or may be a chip (system), or another component or assembly that can be disposed in a network device. Alternatively, the communication apparatus 1400 may be an apparatus that includes a network device. This is not limited in this application.

In addition, for the technical effects of the communication apparatus 1400, refer to the technical effects of the foregoing communication method. Details are not described herein again.

In a fourth possible embodiment, the communication apparatus 1400 may be applied to the foregoing communication method, and a module (for example, a processor, a chip, or a chip system) of a terminal in the communication method performs the method. Alternatively, the method may be implemented by a logical node, a logical module, or software that can implement all or some functions of the terminal. For ease of description, the following uses an example in which the method is performed by the terminal for description.

The transceiver module 1401 is configured to receive multi-connectivity related information from a network. The processing module 1402 is configured to establish multi-connectivity with the network based on the related information. The related information includes indication information and/or policy information. The indication information is used to indicate that the terminal needs to establish multi-connectivity. The policy information is used to indicate a policy for establishing multi-connectivity. Multi-connectivity refers to separately establishing connections of 3rd Generation Partnership Project 3GPP access types with a plurality of cells at the same time.

In one possible design, the policy information includes at least one of the following: a service policy, an access type policy, a location policy, or a time policy. The service policy refers to the establishment of multi-connectivity in the case that the network cannot meet a service requirement. The access type policy refers to the combination of access types required to establish multi-connectivity. The location policy refers to the establishment of multi-connectivity within a preset area. The time policy refers to the establishment of multi-connectivity within a preset time period.

In one possible design, the transceiver module 1401 is configured to send capability information of the terminal to the network. The capability information of the terminal is used to indicate that the terminal supports separately establishing connections of 3GPP access types with a plurality of cells at the same time.

In one possible design, the transceiver module 1401 is configured to send S-NSSAI single network slice selection assistance information and DNN data network name corresponding to a session of the terminal to the network. The S-NSSAI and DNN correspond to the service of the terminal, and the service of the terminal is a service that requires the establishment of multi-connectivity.

In a possible design solution, the transceiver module 1401 is configured to: when the terminal needs to establish multi-connectivity, send request information to a network. The request information is used to indicate that the terminal requests to establish multi-connectivity.

Optionally, the processing module 1402 is configured to: in response to an operation of a user to enable multi-connectivity, determine that the terminal needs to establish multi-connectivity. Alternatively, the processing module 1402 is configured to: when a service of the terminal needs to be executed, obtain a UE route selection policy URSP rule that matches the service of the terminal, and when the URSP rule indicates that multi-connectivity needs to be established, determine that the terminal needs to establish multi-connectivity.

Optionally, the transceiver module 1401 may include a sending module (not shown in FIG. 14) and a receiving module (not shown in FIG. 14). The sending module is configured to implement a sending function of the communication apparatus 1400. The receiving module is configured to implement a receiving function of the communication apparatus 1400.

Optionally, the communication apparatus 1400 may further include a storage module (not shown in FIG. 14), and the storage module stores a program or instructions. When the processing module 1402 executes the program or instructions, the communication apparatus 1400 can perform the functions in the methods shown in FIG. 6 to FIG. 8.

It can be understood that the communication apparatus 1400 may be a terminal, or may be a chip (system), another component, or another assembly that can be disposed in a terminal. Alternatively, the communication apparatus 1400 may be an apparatus that includes a terminal. This is not limited in this application.

In addition, for the technical effects of the communication apparatus 1400, refer to the technical effects of the foregoing communication method. Details are not described herein again.

In a fifth possible embodiment, the communication apparatus 1400 may be applied to the foregoing communication method, and is executed by a module (for example, a processor, a chip, or a chip system) of the terminal in the communication method. Alternatively, the communication apparatus 1400 may be implemented by a logical node, a logical module, or software that can implement all or some functions of the terminal. For ease of description, the following uses an example in which the method is executed by the terminal for description.

The processing module 1402 is configured to: when a service of the terminal needs to be executed, obtain a route selection policy URSP rule that matches the service of the terminal. The processing module 1402 is further configured to: if the URSP rule indicates that multi-connectivity needs to be established, establish multi-connectivity with the network, where multi-connectivity refers to separately establishing connections of 3rd Generation Partnership Project 3GPP access types with a plurality of cells at the same time.

In one possible design solution, the URSP rule further indicates the combination of access types required to establish multi-connectivity.

In one possible design solution, the transceiver module 1401 is configured to receive the URSP rule from a network.

Optionally, the transceiver module 1401 may include a sending module (not shown in FIG. 14) and a receiving module (not shown in FIG. 14). The sending module is configured to implement the sending function of the communication apparatus 1400, and the receiving module is configured to implement the receiving function of the communication apparatus 1400.

Optionally, the communication apparatus 1400 may further include a storage module (not shown in FIG. 14), where the storage module stores a program or instructions. When the processing module 1402 executes the program or instructions, the communication apparatus 1400 can perform the functions in the methods shown in FIG. 6 to FIG. 8.

It can be understood that the communication apparatus 1400 may be a terminal, or may be a chip (system) or another component or assembly that can be disposed in a terminal. Alternatively, the communication apparatus 1400 may be an apparatus that includes a terminal. This is not limited in this application.

In addition, for a technical effect of the communication apparatus 1400, refer to the technical effect of the foregoing communication method. Details are not described herein again.

In a sixth possible embodiment, the communication apparatus 1400 may be applicable to the policy control network element in the foregoing communication method, to implement a function of the policy control network element. Details are as follows:
a processing module 1402, configured to obtain a new URSP rule of the terminal when the routing policy URSP rule of the terminal needs to be updated; and a transceiver module 1401, configured to send the new URSP rule to the terminal. The new URSP rule is used to indicate that multi-connectivity needs to be established. Multi-connectivity means that connections of 3rd Generation Partnership Project 3GPP access types are separately established with a plurality of cells at the same time. In other words, the URSP rule is updated, so that the terminal can have a capability of establishing multi-connectivity.

In a possible design solution, the new URSP rule further indicates an access type combination required for establishing multi-connectivity.

Optionally, the transceiver module 1401 may include a sending module (not shown in FIG. 14) and a receiving module (not shown in FIG. 14). The sending module is configured to implement a sending function of the communication apparatus 1400, and the receiving module is configured to implement a receiving function of the communication apparatus 1400.

Optionally, the communication apparatus 1400 may further include a storage module (not shown in FIG. 14). The storage module stores a program or instructions. When the processing module 1402 executes the program or instructions, the communication apparatus 1400 can perform the functions in the methods shown in FIG. 6 to FIG. 8.

It can be understood that the communication apparatus 1400 may be a network device, or may be a chip (system) or another component or assembly that can be disposed in a network device. Alternatively, the communication apparatus 1400 may be an apparatus that includes a network device. This is not limited in this application.

Furthermore, the technical effects of the communication apparatus 1400 may refer to the technical effects of the communication method described above. Details are not described herein again.

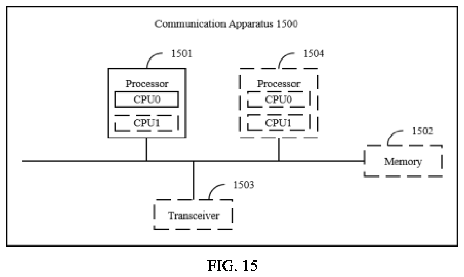

FIG. 15 is a second schematic structural diagram of a communication apparatus according to an embodiment of this application. For example, the communication apparatus may be a terminal, or may be a chip (system) or another component or assembly that can be disposed in a terminal. As shown in FIG. 15, the communication apparatus 1500 may include a processor 1501. Optionally, the communication apparatus 1500 may further include a memory 1502 and/or a transceiver 1503. The processor 1501 is coupled to the memory 1502 and the transceiver 1503, for example, may be connected through a communication bus.

The following provides a detailed description of the various components of the communication apparatus 1500 in combination with FIG. 15:
Among them, the processor 1501 is the control center of the communication apparatus *1500.* It may be one processor or a general term for a plurality of processing elements. For example, the processor 1501 is one or more central processing units (central processing unit, CPU), or may be a specific integrated circuit (application specific integrated circuit, ASIC), or one or more integrated circuits configured to implement embodiments of this application. For example, one or more microprocessors (digital signal processor, DSP), or one or more field programmable gate arrays (field programmable gate array, FPGA).

Optionally, the processor 1501 may execute various functions of the communication apparatus 1500 by running or executing a software program stored in the memory 1502, and by invoking data stored in the memory 1502. For example, the processor 1501 may execute the communication method shown in FIG. 8 to FIG. 13.

In a specific implementation, as an embodiment, the processor 1501 may include one or more CPUs. For example, as shown in FIG. 15, the processor 1501 includes a CPU 0 and a CPU 1.

In a specific implementation, as an embodiment, the communication apparatus 1500 may also include a plurality of processors, for example, the processor 1501 and the processor 1504 shown in FIG. 15. Each of these processors may be a single-core processor (single-CPU), or may be a multi-core processor (multi-CPU). The processor herein may refer to one or more devices, circuits, and/or processing cores configured to process data (e.g., computer program instructions).

The memory 1502 is configured to store a software program for executing the solutions of this application, and the processor 1501 controls execution of the software program. For a specific implementation, refer to the foregoing method embodiment. Details are not described herein again.

Optionally, the memory 1502 may be a read-only memory (read-only memory, ROM) or another type of static storage device that can store static information and an instruction, a random access memory (random access memory, RAM) or another type of dynamic storage device that can store information and an instruction. It may also be an electrically erasable programmable read-only memory (electrically erasable programmable read-only memory, EEPROM), a compact disc read-only memory (compact disc read-only memory, CD-ROM) or other optical disk storage, an optical disk storage (including compact disc, laser disc, optical disc, digital versatile disc, Blu-ray disc, etc.), a magnetic disk storage medium or another magnetic storage device, or any other medium that can be used to carry or store expected program code in a form of an instruction or a data structure and that can be accessed by a computer, but is not limited thereto. The memory 1502 may be integrated with the processor 1501, or may exist independently, and is coupled to the processor 1501 by using an interface circuit (not shown in FIG. 15) of the communication apparatus 1500. This is not specifically limited in this embodiment of this application.

The transceiver 1503 is configured to communicate with another communication apparatus. For example, the communication apparatus 1500 is a terminal, and the transceiver 1503 may be configured to communicate with a network device, or communicate with another terminal device. For another example, the communication apparatus 1500 is a network device, and the transceiver 1503 may be configured to communicate with a terminal, or communicate with another network device.

Optionally, the transceiver 1503 may include a receiver and a transmitter (not separately shown in FIG. 15). The receiver is configured to implement a receiving function, and the transmitter is configured to implement a sending function.

Optionally, the transceiver 1503 may be integrated with the processor 1501, or may exist independently, and is coupled to the processor 1501 by using an interface circuit (not shown in FIG. 15) of the communication apparatus 1500. This is not specifically limited in this embodiment of this application.

It may be understood that the structure of the communication apparatus 1500 shown in FIG. 15 does not constitute a limitation on the communication apparatus. An actual communication apparatus may include more or fewer components than those shown in the figure, or combine certain components, or have different component arrangements.

In addition, for the technical effects of the communication apparatus 1500, refer to the technical effects of the method described in the foregoing method embodiments. Details are not described herein again.

It should be understood that, in embodiments of this application, the processor may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA), or another programmable logic device, a discrete gate, or a transistor logic device, a discrete hardware component, or the like. The general-purpose processor may be a microprocessor, or the processor may be any conventional processor, or the like.

It should be further understood that the memory in this embodiment of this application may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), electrically erasable programmable read-only memory (electrically EPROM, EEPROM), or flash memory. The volatile memory may be a random access memory (random access memory, RAM), which is used as an external cache. By way of example but not limitation, many forms of random access memory (RAM) are available, such as static random access memory (static RAM, SRAM), dynamic random access memory (DRAM), synchronous dynamic random access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synchlink dynamic random access memory (synchlink DRAM, SLDRAM) and direct rambus random access memory (direct rambus RAM, DR RAM).

In the foregoing embodiments, all or a part of the embodiments may be implemented through software, hardware (such as a circuit), firmware, or any other arbitrary combination. When software is used for implementation, all or a part of the embodiments may be implemented in the form of a computer program product. The computer program product includes one or more computer instructions or computer programs. When the computer instructions or computer programs are loaded or executed on a computer, all or a part of the processes or functions according to the embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be a computer-readable storage medium that can be accessed by a computer in any available medium, or a server, a data center, or another data storage device that includes one or more available medium collections. The available medium may be a magnetic medium (for example, a floppy disk, a hard disk, or a magnetic tape), an optical medium (for example, a DVD), or a semiconductor medium. The semiconductor medium may be a solid-state drive.

It should be understood that, in this specification, the term "and/or" merely describes an association relationship between associated objects, indicating that three types of relationships may exist. For example, A and/or B may indicate the following three cases: A exists alone, both A and B exist, and B exists alone. Herein, A and B may be singular or plural. In addition, the character "/" in this specification generally indicates that an association relationship between the objects before and after the "/" is an "or" relationship. However, it may also indicate that the association relationship between the objects before and after the "/" is an "and/or" relationship. For specific understanding, refer to the context before and after.

In this application, "at least one" refers to one or more, and "a plurality of" refers to two or more. "At least one of the following items (pieces)" or similar expressions refer to any combination of these items, including any combination of a single item (piece) or multiple items (pieces). For example, "at least one of a, b, or c" may indicate the following three cases: a, b, c, a-b, a-c, b-c, or a-b-c, where a, b, and c may be singular or plural.

It should be understood that, in various embodiments of this application, the sequence numbers of the foregoing processes do not indicate the execution sequence. The execution sequence of the processes should be determined based on their functions and internal logic, and should not be considered as any limitation on the implementation process of the embodiments of this application.

A person of ordinary skill in the art may clearly understand that, for the convenience and conciseness of description, the specific working processes of the systems, apparatuses, and units described above may refer to the corresponding processes in the foregoing method embodiments, and details are not described herein again.

A person skilled in the art can clearly understand that, for the convenience and conciseness of description, the specific working processes of the systems, apparatuses, and units described above may refer to the corresponding processes in the foregoing method embodiments, and details are not described herein again.

In several embodiments provided in this application, it should be understood that the disclosed systems, apparatuses, and methods may be implemented in other ways. For example, the apparatus embodiments described above are merely examples. For instance, the division of the units is merely a logical function division. During actual implementation, there may be another division manner. For example, a plurality of units or components may be combined or integrated into another system, or some features may be ignored or not performed. Another point is that the mutual couplings or direct couplings or communication connections that are shown or discussed as being between the units may be through some interfaces. The indirect couplings or communication connections between the apparatuses or units may be in an electrical, mechanical, or other form.

The units described as separate components may or may not be physically separate, and parts displayed as units may or may not be physical units, that is, they may be located in one place, or may be distributed over multiple network units. Some or all of the units may be selected according to actual needs to achieve the objectives of the solutions in this embodiment.

Additionally, in various embodiments of this application, each functional unit may be integrated into one processing unit, or each unit may exist physically and independently, or two or more units may be integrated into one unit.

If the functions are implemented in the form of software functional units and sold or used as independent products, the functions may be stored in a computer-readable storage medium. Based on such an understanding, the technical solutions of this application essentially, or the part contributing to the prior art, or some of the technical solutions may be implemented in the form of a software product. The computer software product is stored in a storage medium and includes several instructions for instructing a computer device (which may be a personal computer, a server, or a network device, etc.) to perform all or some of the steps of the methods described in the various embodiments of this application. The foregoing storage medium includes: a USB flash drive, a removable hard disk, a read-only memory (read-only memory, ROM), a random access memory (random access memory, RAM), a magnetic disk, an optical disc, or any other medium that can store program code.

As described above, this is merely a specific implementation of this application. However, the protection scope of this application is not limited thereto. Any person skilled in the art of this technology, within the technical scope disclosed in this application, can easily conceive of variations or replacements, all of which should be covered within the protection scope of this application. Therefore, the protection scope of this application shall be determined according to the protection scope of the claims described above.

## Claims

1. A communication method, applied to a data management network element, comprising:
obtaining, by the data management network element, multi-connectivity related information, wherein the related information includes indication information and/or policy information, the indication information is used to indicate that a terminal needs to establish multi-connectivity, the policy information is used to indicate a policy for establishing multi-connectivity, and multi-connectivity refers to separately establishing connections of 3rd Generation Partnership Project 3GPP access types with a plurality of cells at the same time;
sending, by the data management network element, the related information to the terminal.

2. The method according to claim 1, wherein:
the policy information includes at least one of a service policy, an access type policy, a location policy, or a time policy, wherein the service policy means that multi-connectivity needs to be established in the case that a network cannot meet a service requirement; the access type policy means an access type combination required for establishing multi-connectivity; the location policy means that multi-connectivity needs to be established in a preset area; and the time policy means that multi-connectivity needs to be established in a preset time period.

3. The method according to claim 1 or 2, wherein the obtaining, by the data management network element, multi-connectivity related information comprises:
obtaining, by the data management network element, capability information of the terminal, wherein the capability information of the terminal is used to indicate that the terminal supports separately establishing connections of 3GPP access types with a plurality of cells at the same time;
obtaining, by the data management network element, the related information based on the capability information of the terminal.

4. The method according to claim 1 or 2, wherein the obtaining, by the data management network element, multi-connectivity related information comprises:
obtaining, by the data management network element, slice information requested by the terminal, wherein the slice information requested by the terminal is used to indicate a network slice requested by the terminal;
obtaining, by the data management network element, the related information based on the network slice being a slice corresponding to a multi-connectivity service.

5. The method according to claim 1 or 2, wherein the obtaining, by the data management network element, multi-connectivity related information comprises:
obtaining, by the data management network element, subscription data of the terminal, wherein the subscription data of the terminal includes information used to indicate that the network can provide a multi-connectivity service for the terminal;
obtaining, by the data management network element, the related information based on the subscription data of the terminal.

6. The method according to claim 1 or 2, wherein the obtaining, by the data management network element, multi-connectivity related information comprises:
receiving, by the data management network element, service information from an access and mobility management network element, wherein the service information is used to indicate that a network cannot meet a service requirement of the terminal;
obtaining, by the data management network element, the related information based on the service information.

7. The method according to claim 6, wherein:
that the network cannot meet the service requirement of the terminal comprises: bandwidth provided by the network for the terminal cannot meet a bandwidth requirement of a service of the terminal, and/or signal quality of the network cannot meet a signal quality requirement of the service of the terminal.

8. The method according to claim 7, wherein:
in response to the bandwidth provided by the network for the terminal cannot meet a bandwidth requirement of a service of the terminal, the service information is further used to indicate bandwidth that the network needs to additionally provide for the terminal.

9. The method according to claim 1 or 2, wherein the obtaining, by the data management network element, multi-connectivity related information comprises:
obtaining, by the data management network element, the related information based on a preset condition, wherein the preset condition includes at least one of: currently being within a time period in which the terminal needs to establish multi-connectivity, or a location of the terminal being within an area in which the terminal needs to establish multi-connectivity.

10. The method according to claim 1 or 2, wherein the obtaining, by the data management network element, multi-connectivity related information comprises:
obtaining, by the data management network element, S-NSSAI single network slice selection assistance information and DNN data network name corresponding to a session of the terminal, wherein the S-NSSAI and the DNN correspond to a service of the terminal;
obtaining, by the data management network element, the related information based on the service of the terminal being a service that requires establishment of multi-connectivity.

11. The method according to claim 1 or 2, wherein the obtaining, by the data management network element, multi-connectivity related information comprises:
receiving, by the data management network element, request information from the terminal, wherein the request information is used to indicate that the terminal requests to establish multi-connectivity;
obtaining, by the data management network element, the related information based on the request information.

12. A communication method, applied to an access and mobility management network element, comprising:
sending, by the access and mobility management network element, service information to a data management network element, wherein the service information indicates that a network cannot meet a service requirement of a terminal;
receiving, by the access and mobility management network element, multi-connectivity related information returned by the data management network element based on the service information, wherein the related information includes indication information and/or policy information, the indication information is used to indicate that a terminal needs to establish multi-connectivity, the policy information is used to indicate a policy for establishing multi-connectivity, and multi-connectivity refers to separately establishing connections of 3rd Generation Partnership Project 3GPP access types with a plurality of cells at the same time;
sending, by the access and mobility management network element, the related information to the terminal.

13. The method according to claim 12, wherein the method further comprises:
receiving, by the access and mobility management network element, an N2 message from an access network device, wherein the N2 message includes the service information, and the service information is used to indicate that bandwidth provided by the network for the terminal cannot meet a bandwidth requirement of a service of the terminal.

14. The method according to claim 13, wherein:
the service information is further used to indicate bandwidth that the network needs to additionally provide for the terminal.

15. The method according to claim 12, wherein the method further comprises:
obtaining, by the access and mobility management network element, the service information based on the terminal being located in a low-signal area, wherein the service information is used to indicate that signal quality of the network cannot meet a signal quality requirement of a service of the terminal.

16. A communication method, applied to a policy control network element, comprising:
obtaining, by the policy control network element, S-NSSAI single network slice selection assistance information and DNN data network name corresponding to a session of a terminal, wherein the S-NSSAI and the DNN correspond to a service of the terminal;
sending, by the policy control network element, multi-connectivity related information to the terminal based on the service of the terminal being a service that requires establishment of multi-connectivity, wherein the related information includes indication information and/or policy information, the indication information is used to indicate that the terminal needs to establish multi-connectivity, the policy information is used to indicate a policy for establishing multi-connectivity, and multi-connectivity refers to separately establishing connections of 3rd Generation Partnership Project 3GPP access types with a plurality of cells at the same time.

17. The method according to claim 16, wherein the obtaining, by the policy control network element, S-NSSAI and DNN corresponding to a session of a terminal comprises:
receiving, by the policy control network element, the S-NSSAI and the DNN from a session management network element in a process of establishing or modifying a session policy of the terminal.

18. The method according to claim 16 or 17, wherein:
the policy information includes at least one of a service policy, an access type policy, a location policy, or a time policy, wherein the service policy means that multi-connectivity needs to be established in the case that a network cannot meet a service requirement; the access type policy means an access type combination required for establishing multi-connectivity; the location policy means that multi-connectivity needs to be established in a preset area; and the time policy means that multi-connectivity needs to be established in a preset time period.

19. A communication method, comprising:
receiving multi-connectivity related information from a network, wherein the related information includes indication information and/or policy information, the indication information is used to indicate that a terminal needs to establish multi-connectivity, the policy information is used to indicate a policy for establishing multi-connectivity, and multi-connectivity refers to separately establishing connections of 3rd Generation Partnership Project 3GPP access types with a plurality of cells at the same time;
establishing multi-connectivity with the network based on the related information.

20. The method according to claim 19, wherein:
the policy information includes at least one of a service policy, an access type policy, a location policy, or a time policy, wherein the service policy means that multi-connectivity needs to be established in the case that a network cannot meet a service requirement; the access type policy means an access type combination required for establishing multi-connectivity; the location policy means that multi-connectivity needs to be established in a preset area; and the time policy means that multi-connectivity needs to be established in a preset time period.

21. The method according to claim 19 or 20, wherein the method further comprises:
sending capability information of the terminal to the network, wherein the capability information of the terminal is used to indicate that the terminal supports separately establishing connections of 3GPP access types with a plurality of cells at the same time.

22. The method according to claim 19 or 20, wherein the method further comprises:
sending, to the network, S-NSSAI single network slice selection assistance information and DNN data network name corresponding to a session of the terminal, wherein the S-NSSAI and the DNN correspond to a service of the terminal, and the service of the terminal is a service that requires establishment of multi-connectivity.

23. The method according to claim 19 or 20, wherein the method further comprises:
sending request information to the network in the case that the terminal needs to establish multi-connectivity, wherein the request information is used to indicate that the terminal requests to establish multi-connectivity.

24. The method according to claim 23, wherein the method further comprises:
determining that the terminal needs to establish multi-connectivity in response to an operation of a user for enabling multi-connectivity;
or
obtaining a UE route selection policy URSP rule that matches a service of the terminal in the case that the service of the terminal needs to be executed;
determining that the terminal needs to establish multi-connectivity in the case that the URSP rule indicates that multi-connectivity needs to be established.

25. A communication apparatus, wherein the apparatus comprises a module configured to perform the method according to any one of claims 1 to 24.

26. A communication apparatus, wherein the communication apparatus comprises: a processor and a memory, wherein the memory is configured to store computer instructions, and when the processor executes the instructions, the communication apparatus is enabled to perform the method according to any one of claims 1 to 24.

27. A computer-readable storage medium, wherein the computer-readable storage medium comprises a computer program or instructions, and when the computer program or instructions are run on a computer, the computer is enabled to perform the method according to any one of claims 1 to 24.
